(19) Europäisches Patentamt
European Patent Office
Office européen des brevets

(11) EP 4 606 845 A1

(12) **EUROPEAN PATENT APPLICATION**
published in accordance with Art. 153(4) EPC

(43) Date of publication:
**27.08.2025 Bulletin 2025/35**

(21) Application number: **23879785.6**

(22) Date of filing: **17.10.2023**

(51) International Patent Classification (IPC):
***C08J 5/18*** *(2006.01)* ***B32B 27/30*** *(2006.01)*
***C08L 29/04*** *(2006.01)* ***G02B 5/30*** *(2006.01)*

(52) Cooperative Patent Classification (CPC):
**B32B 27/30; C08J 5/18; C08L 29/04; G02B 5/30**

(86) International application number:
**PCT/JP2023/037513**

(87) International publication number:
**WO 2024/085142 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.10.2022 JP 2022166806**

(71) Applicant: **Kuraray Co., Ltd.**
**Kurashiki-shi, Okayama 710-0801 (JP)**

(72) Inventors:
- **YAMAGUCHI, Mao**
  **Kurashiki-shi, Okayama 713-8550 (JP)**
- **ISOZAKI, Takanori**
  **Tokyo 100-0004 (JP)**

(74) Representative: **D Young & Co LLP**
**3 Noble Street**
**London EC2V 7BQ (GB)**

(54) **POLYVINYL ALCOHOL FILM AND STRETCHED FILM**

(57) The present invention relates to a polyvinyl alcohol film containing a polyvinyl alcohol resin (α) and a nitrogen element-containing compound (β), wherein the signal intensity ratio in TOF-SIMS measurement data satisfies equation (I) below. (I): $(C/D)/(A/B) \geq 5$ [In the expression, A indicates an intensity value of the $CN^-$ signal derived from the nitrogen element-containing compound (β) at $P_{min}$; B indicates an intensity value of a $C_2H_3O_2^-$ signal derived from the polyvinyl alcohol resin (α) at $P_{min}$; C indicates an intensity value of the $CN^-$ signal derived from the nitrogen element-containing compound (β) at $P_{MAX}$; and D indicates an intensity value of the $C_2H_3O_2^-$signal derived from the polyvinyl alcohol resin (α) at $P_{MAX}$.]

[FIG. 2]

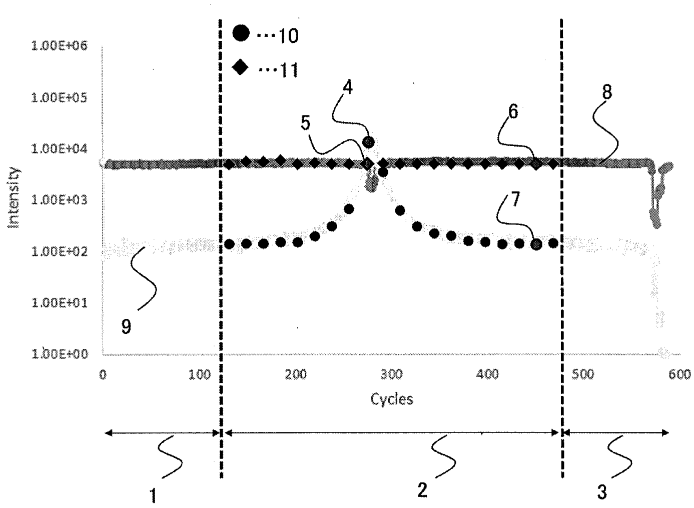


EP 4 606 845 A1

Processed by Luminess, 75001 PARIS (FR)

## Description

### TECHNICAL FIELD

This patent application claims priority under the Paris Convention based on Japanese Patent Application No. 2022-166806 (filed on October 18, 2022), which is incorporated herein by reference in its entirety.
The present invention relates to a polyvinyl alcohol film, a method of producing the same, and a stretched film.

### BACKGROUND ART

Polyvinyl alcohol films (hereinafter, "polyvinyl alcohol" may be abbreviated as "PVA") are used in a wide range of applications, such as packaging films, water-soluble films, agricultural films, mold release films, and optical films.
In such PVA films, for example, a nitrogen element-containing compound (hereinafter, may be abbreviated as "N-containing compound") may be incorporated as a dye or a pigment for the purpose of imparting optical properties and the like, and the PVA films are sometimes used as stretched films obtained by performing a stretching treatment in an aqueous treatment bath that contains an organic metal such as cobalt ions in addition to a dye, a pigment, or the like (e.g., Patent Document 1).

### PRIOR ART DOCUMENT

### PATENT DOCUMENT

Patent Document 1: JP-A-S56-48601

### SUMMARY OF THE INVENTION

### PROBLEMS TO BE SOLVED BY THE INVENTION

As a method of producing a PVA film, for example, a method of removing a solvent from a solution in which a PVA resin, an N-containing compound, and the like are dissolved, or a method of immersing a PVA film in an aqueous solution containing an N-containing compound and the like and subsequently drying the PVA film may be generally employed. However, when a conventional PVA film is stretched in an aqueous treatment bath, an N-containing compound is likely to be released from a surface layer of the film, making it difficult to adjust the concentration of the N-containing compound in the entire film and causing contamination of the aqueous treatment bath in some cases. Therefore, such a PVA film is required to have a water resistance that can inhibit the release of the N-containing compound.
Further, stretched films obtained by stretching PVA films can be widely used not only indoors but also outdoors; therefore, these stretched films are required to have a durability against the external environment such as temperature and humidity, i.e., moist heat resistance. Particularly, when a stretched film contains an N-containing compound, since the N-containing compound may be decomposed by the effect of the external environment, superior moist heat resistance is required. However, conventional stretched films containing an N-containing compound do not have sufficient moist heat resistance in some cases.
Therefore, an object of the present invention is to provide: a PVA film having excellent water resistance; and a method of producing the same.
Another object of the present invention is to provide: a stretched film having excellent moist heat resistance; a PVA film from which the stretched film can be formed; and a method of producing the same.

### SOLUTIONS TO THE PROBLEMS

The present inventors intensively studied to solve the above-described problems, and consequently discovered that the problems can be solved by a PVA film and a stretched film, which contain a polyvinyl alcohol resin ($\alpha$) and a nitrogen element-containing compound ($\beta$), and in which a specific signal intensity ratio measured by a time-of-flight secondary ion mass spectrometer (TOF-SIMS) is in a specific range, thereby completing the present invention.
That is, the present invention encompasses the following preferred aspects.

[1] A polyvinyl alcohol film, containing:

a polyvinyl alcohol resin ($\alpha$); and
a nitrogen element-containing compound ($\beta$),

wherein the polyvinyl alcohol film satisfies the following Equation (I):

$$(C/D)/(A/B) \geq 5 \qquad (I)$$

[wherein, when at least 20 points equally spaced in the thickness direction are measured by a TOF-SIMS within a central 60% range of the film in the thickness direction and, in the thus obtained measurement data, points where an intensity value of a $CN^-$ signal derived from the nitrogen element-containing compound (β) is maximum and minimum are defined as $P_{MAX}$ and $P_{min}$, respectively:

A represents an intensity value of the $CN^-$ signal derived from the nitrogen element-containing compound (β) at $P_{min}$;
B represents an intensity value of a $C_2H_3O_2^-$ signal derived from the polyvinyl alcohol resin (α) at $P_{min}$;
C represents an intensity value of the $CN^-$ signal derived from the nitrogen element-containing compound (β) at $P_{MAX}$; and
D represents an intensity value of the $C_2H_3O_2^-$ signal derived from the polyvinyl alcohol resin (α) at $P_{MAX}$].

[2] The polyvinyl alcohol film according to [1], wherein the nitrogen element-containing compound (β) has an aromatic ring.
[3] The polyvinyl alcohol film according to [1] or [2], wherein the nitrogen element-containing compound (β) is a dye or a pigment.
[4] The polyvinyl alcohol film according to any one of [1] to [3], wherein the content of the nitrogen element-containing compound (β) is 0.01 to 20 parts by mass with respect to 100 parts by mass of the polyvinyl alcohol resin (α).
[5] The polyvinyl alcohol film according to any one of [1] to [4], wherein the content of the polyvinyl alcohol resin (α) is 60 to 99.99% by mass with respect to the mass of the polyvinyl alcohol film.
[6] The polyvinyl alcohol film according to any one of [1] to [5], having a thickness of 1 to 250 μm.
[7] A method of producing the polyvinyl alcohol film according to any one of [1] to [6], the method including the step of laminating a polyvinyl alcohol film 1 that contains a polyvinyl alcohol resin (α1) and a polyvinyl alcohol film 2 that contains a polyvinyl alcohol resin (α2) via an aqueous polyvinyl alcohol resin solution that contains a polyvinyl alcohol resin (α3) and a nitrogen element-containing compound (β).
[8] The method according to [7], wherein the polyvinyl alcohol resin (α3) is the same as at least one selected from the group consisting of the polyvinyl alcohol resin (α1) and the polyvinyl alcohol resin (α2).
[9] A stretched film, containing:

a polyvinyl alcohol resin (α); and
a nitrogen element-containing compound (β),
wherein the stretched film satisfies the following Equation (II):

$$(G/H)/(E/F) > 3 \qquad (II)$$

[wherein, when at least 20 points equally spaced in the thickness direction are measured by a TOF-SIMS within a central 60% range of the stretched film in the thickness direction and, in the thus obtained measurement data, points where an intensity value of a $CN^-$ signal derived from the nitrogen element-containing compound (β) is maximum and minimum are defined as $P_{MAX}$ and $P_{min}$, respectively:

E represents an intensity value of the $CN^-$ signal derived from the nitrogen element-containing compound (β) at $P_{min}$;
F represents an intensity value of a $C_2H_3O_2^-$ signal derived from the polyvinyl alcohol resin (α) at $P_{min}$;
G represents an intensity value of the $CN^-$ signal derived from the nitrogen element-containing compound (β) at $P_{MAX}$; and
H represents an intensity value of the $C_2H_3O_2^-$ signal derived from the polyvinyl alcohol resin (α) at $P_{MAX}$].

[10] The stretched film according to [9], wherein the nitrogen element-containing compound (β) has an aromatic ring.
[11] The stretched film according to [9] or [10], wherein the nitrogen element-containing compound (β) is a dye or a pigment.
[12] The stretched film according to any one of [9] to [11], wherein the content of the nitrogen element-containing compound (β) is 0.01 to 20 parts by mass with respect to 100 parts by mass of the polyvinyl alcohol resin (α).
[13] The stretched film according to any one of [9] to [12], wherein the content of the polyvinyl alcohol resin (α) is 65 to

99.99% by mass with respect to the mass of the stretched film.
[14] The stretched film according to any one of [9] to [13], having a thickness of 0.1 to 200 μm.
[15] The stretched film according to any one of [9] to [14], obtained by stretching the polyvinyl alcohol film according to any one of [1] to [6].
[16] The stretched film according to any one of [9] to [15], which is a polarizing film, a photon up-conversion film, or a photochromic film.

EFFECTS OF THE INVENTION

The PVA film of the present invention not only has excellent water resistance, but also can yield a stretched film having excellent moist heat resistance.
The stretched film of the present invention has excellent moist heat resistance.

BRIEF DESCRIPTION OF DRAWINGS

[Fig. 1] shows a schematic cross-sectional view of the PVA film according to one embodiment of the present invention.
[Fig. 2] shows measurement data obtained by measuring the PVA film according to one embodiment of the present invention by a TOF-SIMS.

DETAILED DESCRIPTION

Embodiments of the present invention will now be described in detail. It is noted here, however, that the scope of the present invention is not limited to the embodiments described below, and various modifications can be made without departing from the gist of the present invention.

[Polyvinyl Alcohol Film]

The polyvinyl alcohol film of the present invention contains a polyvinyl alcohol resin (α) and a nitrogen element-containing compound (β) (hereinafter, may be abbreviated as "compound (β)"), and satisfies the following Equation (I):

$$(C/D)/(A/B) \geq 5 \qquad (I)$$

[wherein, when at least 20 points equally spaced in the thickness direction are measured by a time-of-flight secondary ion mass spectrometer (hereinafter, may be referred to as "TOF-SIMS") within a central 60% range of the film in the thickness direction and, in the thus obtained measurement data, points where an intensity value of a $CN^-$ signal derived from the compound (β) is maximum and minimum are defined as $P_{MAX}$ and $P_{min}$, respectively:

A represents an intensity value of the $CN^-$ signal derived from the compound (β) at $P_{min}$;
B represents an intensity value of a $C_2H_3O_2^-$ signal derived from the polyvinyl alcohol resin (α) at $P_{min}$;
C represents an intensity value of the $CN^-$ signal derived from the compound (β) at $P_{MAX}$; and
D represents an intensity value of the $C_2H_3O_2^-$ signal derived from the polyvinyl alcohol resin (α) at $P_{MAX}$].

The PVA film of the present invention refers to an unstretched PVA film that has not been subjected to a stretching treatment.
A method of determining A, B, C, and D in Equation (I) will now be described referring to Figs. 1 and 2. Fig. 1 shows a schematic cross-sectional view of a PVA film (100) according to one embodiment of the present invention, and Fig. 2 shows measurement data obtained by measuring the PVA film (100) according to one embodiment of the present invention by a TOF-SIMS.

(i) Using a TOF-SIMS, the surface layer of the PVA film is irradiated with sputtering ions, and sputtering and measurement are alternately repeated to perform a composition analysis in the entire thickness direction of the film.
(ii) From the measurement data obtained in (i), with regard to the intensity value (9) of a $CN^-$ signal derived from the compound (β) and the intensity value (8) of a $C_2H_3O_2^-$ signal derived from the PVA resin (α), at least 20 points equally spaced in the thickness direction are extracted within a central 60% range (2) in the thickness direction. For example, as shown in Fig. 1, when the thickness of the PVA film (100) is defined as X (μm), the "central 60% range in the

thickness direction" means a range of 0.3X from the center (102) of the film in the thickness direction toward each surface (outside), i.e., a total range of 0.6X. For example, when 20 points are extracted within this range, the 20 points exist at 0.03X intervals in the thickness direction.

As shown in Fig. 2, the TOF-SIMS measurement data are presented with "Cycles" being plotted on the abscissa and "Intensity" being plotted on the ordinate. Since the entirety of the thickness direction is measured by TOF-SIMS, "Cycles" on the abscissa corresponds to the thickness of the PVA film (100). Accordingly, the central 60% range (2) (120 to 480 cycles in Fig. 2) on the abscissa (600 cycles in Fig. 2) corresponds to a central 0.6X portion of the PVA film (100) in Fig. 1.

For the calculation of the signal intensity ratio (C/D)/(A/B) in Equation (I), the signal intensity values of at least 20 points are measured within the central 60% range in the thickness direction and, thereamong, the values obtained for at least 20 equally-spaced points may be used. For example, in the embodiment of Fig. 2, 360 points (360 cycles) are measured within this range and, from these points, 20 equally-spaced points [(10) and (11) in Fig. 2] are used for the calculation of the signal intensity ratio (C/D)/(A/B).

(iii) Next, with regard to the intensity value (9) of the $CN^-$ signal derived from the compound (β), among the above-described at least 20 points, the point having a maximum intensity value is defined as $P_{MAX}$ ((4) in Fig. 2), and the point having a minimum intensity value is defined as $P_{min}$ ((7) in Fig. 2). In this case, the intensity value of the $CN^-$ signal derived from the compound (β) at $P_{min}$ is denoted as A ((7) in Fig. 2), and the intensity value of the $C_2H_3O_2^-$ signal derived from the PVA resin (α) at $P_{min}$ is denoted as B ((6) in Fig. 2). Further, the intensity value of the $CN^-$ signal derived from the compound (β) at $P_{MAX}$ is denoted as C ((4) in Fig. 2), and the intensity value of the $C_2H_3O_2^-$ signal derived from the PVA resin (α) at $P_{MAX}$ is denoted as D ((5) in Fig. 2).

(iv) Finally, the signal intensity ratio (C/D)/(A/B) is calculated from the intensity values A, B, C, and D.

The TOF-SIMS measurement can be performed by, for example, the method described below in the section of Examples.

The present inventors discovered that, when the signal intensity ratio (C/D)/(A/B) is 5 or higher in a PVA film containing a PVA resin (α) and a compound (β), not only the water resistance of the PVA film and that of a stretched film obtained by stretching the PVA film can be improved, but also the release of the compound (β) in an aqueous bath can be inhibited. The present inventors also discovered that, when the signal intensity ratio (C/D)/(A/B) is 5 or higher, the moist heat resistance of a stretched film obtained by stretching the PVA film can be improved, and problems such as decomposition of the compound (β) can be inhibited even if the stretched film is left under a high-temperature and high-humidity condition for an extended period.

The reason why the above-described effects are exerted is presumably because a PVA film satisfying Equation (I) and a stretched film obtained from the PVA film have a high concentration of the compound (β) in a central portion of the thickness direction, and the compound (β) is these films is thus unlikely to be affected by the external environment. In the present specification, the water resistance refers to a property that can inhibit the release of the compound (β) from a film in water, and the moist heat resistance refers to a property that can inhibit problems such as decomposition of the compound (β) when a film is exposed to a high-temperature and high-humidity condition. For example, when the stretched film obtained by stretching the PVA film is a polarizing film, the moist heat resistance may be evaluated by measuring the change in dichroic ratio after exposure to a high-temperature and high-humidity condition. In the present specification, an upper limit and a lower limit of a numerical range may be any combination of values. In the present specification, a PVA film and/or a stretched film may be simply referred to as "film".

When the signal intensity ratio (C/D)/(A/B) of the PVA film is lower than 5, the water resistance of the PVA film as well as the moist heat resistance and the water resistance of a stretched film obtained by stretching the PVA film may be deteriorated. In the PVA film of the present invention, the signal intensity ratio (C/D)/(A/B) can be selected as appropriate in accordance with the concentration of the compound (β) and the like, and it is preferably 10 or higher, more preferably 20 or higher, still more preferably 30 or higher, yet still more preferably 40 or higher, particularly preferably 50 or higher, particularly more preferably 60 or higher, and may be, for example, 70 or higher, 90 or higher, 100 or higher, 120 or higher, 140 or higher, 160 or higher, or 170 or higher. When the signal intensity ratio (C/D)/(A/B) is equal to or higher than the above-described lower limit, the water resistance of the PVA film as well as the moist heat resistance and the water resistance of a stretched film obtained by stretching the PVA film can be improved. Meanwhile, the signal intensity ratio (C/D)/(A/B) of the PVA film is preferably 1,000 or lower, more preferably 500 or lower, still more preferably 250 or lower. When the signal intensity ratio (C/D)/(A/B) is equal to or lower than the above-described upper limit, a film can be easily produced with good productivity while reducing the production cost of the film.

In one embodiment of the present invention, the position of C in Equation (I) is preferably within a central 50% range, more preferably within a central 40% range, still more preferably within a central 30% range, yet still more preferably within a central 20%, in the film thickness direction. When the position of C is in this range, the concentration of the

compound (β) tends to be higher in the central portion; therefore, the water resistance of the PVA film as well as the moist heat resistance and the water resistance of a stretched film obtained by stretching the PVA film are likely to be high. Further, in one embodiment of the present invention, the position of A in Equation (I) is preferably within a central 20 to 60% range, more preferably within a central 30 to 60% range, still more preferably within a central 40 to 60% range, in the film thickness direction. When the position of A is in this range, the water resistance of the PVA film as well as the moist heat resistance and the water resistance of a stretched film obtained by stretching the PVA film tend to be high.

<Polyvinyl Alcohol Resin (α)>

The PVA resin (α) is a resin that contains a vinyl alcohol polymer. The vinyl alcohol polymer is a polymer that contains a vinyl alcohol unit as a monomer unit. The vinyl alcohol polymer can be obtained by saponifying a vinyl ester polymer produced by polymerization of a vinyl ester monomer that is a raw material monomer, and the resulting saponified vinyl alcohol polymer may contain a vinyl ester unit in addition to the vinyl alcohol unit.

The vinyl alcohol polymer may be a modified vinyl alcohol copolymer that is obtained by saponifying a copolymer produced by copolymerization of a vinyl ester monomer as a raw material monomer with other monomer, and contains a vinyl alcohol unit and a monomer unit other than the vinyl ester unit. Further, the PVA resin (α) may contain plural kinds of vinyl alcohol polymers having different physical properties.

Examples of the vinyl ester monomer used as a raw material monomer of the vinyl alcohol polymer include vinyl formate, vinyl acetate, vinyl propionate, vinyl valerate, vinyl caprate, vinyl laurate, vinyl stearate, vinyl benzoate, vinyl pivalate, and vinyl versatate, among which vinyl acetate is preferred from the standpoint of the ease of production, availability, cost, and the like.

As described above, the vinyl alcohol polymer may be a modified vinyl alcohol copolymer that contains a vinyl alcohol unit, a vinyl ester unit, and a monomer unit other than the vinyl ester unit. Examples of the other monomer include: α-olefins, such as ethylene, propylene, *n*-butene, and isobutene; acrylic acid and salts thereof; acrylic acid esters; methacrylic acid and salts thereof; methacrylic acid esters; acrylamides; acrylamide derivatives, such as *N*-methylacrylamide, *N*-ethylacrylamide, *N,N*-dimethylacrylamide, diacetone acrylamide, acrylamide propanesulfonic acid and salts thereof, acrylamide propyldimethylamine and salts or quaternary salts thereof, *N*-methylol acrylamide and derivatives thereof; methacrylamides; methacrylamide derivatives, such as *N*-methylmethacrylamide, *N*-ethylmethacrylamide, methacrylamide propanesulfonic acid and salts thereof, methacrylamide propyldimethylamine and salts or quaternary salts thereof, *N*-methylol methacrylamide and derivatives thereof; vinyl ethers, such as methyl vinyl ether, ethyl vinyl ether, *n*-propyl vinyl ether, *i*-propyl vinyl ether, *n*-butyl vinyl ether, *i*-butyl vinyl ether, *t*-butyl vinyl ether, dodecyl vinyl ether, and stearyl vinyl ether; nitriles, such as acrylonitrile and methacrylonitrile; vinyl halides, such as vinyl chloride and vinyl fluoride; vinylidene halides, such as vinylidene chloride and vinylidene fluoride; allyl compounds, such as allyl acetate and allyl chloride; unsaturated dicarboxylic acids, such as maleic acid, itaconic acid, and fumaric acid, as well as salts and esters thereof; vinylsilyl compounds, such as vinyltrimethoxysilane; isopropenyl acetate; and vinyl compounds, such as dimethylallyl vinyl ketone, *N*-vinylpyrrolidone, vinylethylene carbonate, 2,2-dialkyl-4-vinyl-1,3-dioxolane, glycerin monoallyl ether, and 3,4-diacetoxy-1-butene. Thereamong, from the standpoint of the ease of industrial production, the other monomer is preferably an α-olefin such as ethylene. The content (modification amount) of these other monomer units varies depending on the purpose of use, the application, and the like. In one embodiment, the content (modification amount) of the other monomer units may be preferably 10% by mole or less, more preferably 5% by mole or less, but preferably 0% by mass or more, more preferably 0.1% by mass or more, still more preferably 0.5% by mass or more.

In the vinyl alcohol polymer, some of the hydroxyl groups may or may not be crosslinked. Further, in the vinyl alcohol polymer, some of the hydroxyl groups may or may not react with an aldehyde compound such as acetaldehyde or butylaldehyde to form an acetal structure.

From the standpoint of the ease of improving the water resistance of the PVA film as well as the moist heat resistance and the water resistance of the stretched film, the PVA resin (α) preferably contains at least one selected from the group consisting of unmodified vinyl alcohol polymers and α-olefin-vinyl alcohol copolymers, more preferably contains an α-olefin-vinyl alcohol copolymer, as the vinyl alcohol polymer.

In one embodiment of the present invention, the vinyl alcohol polymer contained in the PVA resin (α) has a saponification degree of preferably 88% by mole or more, more preferably 90% by mole or more, still more preferably 93% by mole or more, yet still more preferably 96% by mole or more, particularly preferably 97% by mole or more, particularly more preferably 98% by mole or more, particularly still more preferably 99% by mole or more, but preferably 99.9% by mole or less, more preferably 99.7% by mole or less, still more preferably 99.5% by mole or less. When the saponification degree of the vinyl alcohol polymer contained in the PVA resin (α) is in this range, the water resistance of the PVA film as well as the moist heat resistance and the water resistance of the stretched film are likely to be improved. In addition, the thermal stability of the PVA film is improved, so that molding and film formation can be easily performed in a stable manner. In the present specification, the saponification degree of the vinyl alcohol polymer means a ratio (% by mole) of the number of moles of a vinyl alcohol unit with respect to a total number of moles of a structural unit (typically a vinyl ester unit) convertible

into the vinyl alcohol unit by saponification and the vinyl alcohol unit that are contained in the vinyl alcohol polymer. The saponification degree of the vinyl alcohol polymer can be measured in accordance with JIS K6726 (1994).

In one embodiment of the present invention, the PVA resin (α) has a viscosity-average polymerization degree (hereinafter, may be referred to as "polymerization degree") of preferably 200 or more, more preferably 300 or more, still more preferably 500 or more, yet still more preferably 800 or more, particularly preferably 1,200 or more, but preferably 4,000 or less, more preferably 3,500 or less, still more preferably 3,000 or less. When the polymerization degree is equal to or more than the above-described lower limit, the mechanical strength of the film is likely to be improved, while when the polymerization degree is equal to or less than the above-described upper limit, the process passability, stretchability, and the film formability during the production are likely to be improved. The polymerization degree of the PVA resin (α) can be measured in accordance with JIS K6726 (1994).

When the PVA resin (α) contains two or more vinyl alcohol polymers, the polymerization degree of the PVA resin (α) means an average polymerization degree that is calculated from the polymerization degree and the blending ratio of each of the vinyl alcohol polymers. When the PVA resin (α) contains only one vinyl alcohol polymer, the polymerization degree of the vinyl alcohol polymer is the polymerization degree of the PVA resin (α). When the PVA resin (α) contains two or more vinyl alcohol polymers, the polymerization degree of the PVA resin (α) may be adjusted to be in the above-described range by mixing the vinyl alcohol polymers having different polymerization degrees at an appropriate blending ratio.

In one embodiment of the present invention, the content of the PVA resin (α) is preferably 60% by mass or more, more preferably 70% by mass or more, still more preferably 80% by mass or more, yet still more preferably 85% by mass or more, particularly preferably 87% by mass or more, but preferably 99.99% by mass or less, more preferably 99.9% by mass or less, still more preferably 99% by mass or less, yet still more preferably 98% by mass or less, particularly preferably 95% by mass or less, particularly more preferably 93% by mass or less, with respect to the mass of the PVA film. When the content of the PVA resin (α) is equal to or more than the above-described lower limit, the film-forming properties are likely to be improved, while when the content of the PVA resin (α) is equal to or less than the above-described upper limit, the stretchability of the film is likely to be improved.

<Method of Producing Polyvinyl Alcohol Resin (α)>

As described above, the PVA resin (α) contains a vinyl alcohol polymer. The vinyl alcohol polymer can be obtained, for example, by polymerizing a vinyl ester monomer or a vinyl ester monomer and other monomer to obtain a vinyl ester polymer or copolymer (which may be hereinafter collectively referred to " vinyl ester polymer"), and subsequently saponifying this vinyl ester polymer. Examples of a method of polymerizing the vinyl ester monomer and the like include known methods, such as bulk polymerization, solution polymerization, suspension polymerization, and emulsion polymerization. Thereamong, bulk polymerization or solution polymerization, which is performed in the absence of a solvent or in a solvent such as an alcohol, is preferably employed. Examples of the alcohol used as a solvent in solution polymerization include lower alcohols, such as methanol, ethanol, and propanol. Examples of an initiator used for copolymerization include known initiators, for example, azo-based initiators and peroxide-based initiators, such as 2,2'-azobisisobutyronitrile, 2,2'-azobis(2,4-dimethyl-valeronitrile), benzoyl peroxide, and n-propyl peroxydicarbonate. The polymerization temperature is not particularly limited; however, it is preferably in a range of 0°C to 150°C. For example, when the vinyl alcohol polymer is an ethylene-vinyl alcohol copolymer or the like, it is preferred to copolymerize a vinyl ester monomer and a monomer such as ethylene by the above-described method.

The vinyl ester polymer obtained in the polymerization step can be saponified in an organic solvent by alcoholysis or hydrolysis in the presence of a catalyst. Examples of the catalyst used in the saponification step include: basic catalysts, such as sodium hydroxide, potassium hydroxide, and sodium methoxide; and acidic catalysts, such as sulfuric acid, hydrochloric acid, and *p*-toluenesulfonic acid. Examples of the organic solvent used in the saponification step include, but are not particularly limited to: alcohols, such as methanol and ethanol; esters, such as methyl acetate and ethyl acetate; ketones, such as acetone and methyl ethyl ketone; and aromatic hydrocarbons, such as benzene and toluene. These organic solvents may be used singly, or in combination of two or more kinds thereof. Thereamong, it is simple and preferred to use methanol or a mixed solution of methanol and methyl acetate as a solvent and perform a saponification reaction in the presence of sodium hydroxide that is a basic catalyst. The amount of a saponification catalyst to be used is preferably 0.001 to 0.5 in terms of molar ratio with respect to the vinyl ester monomer unit in the vinyl ester polymer. This molar ratio is more preferably 0.002 or higher, but more preferably 0.4 or lower, still more preferably 0.3 or lower.

A preferred embodiment of the saponification step is as follows. First, a saponification catalyst such as sodium hydroxide is added to a vinyl ester polymer solution obtained in the polymerization step, followed by mixing. In this case, the solvent is preferably methanol. The mixing initially yields a homogeneous liquid; however, as the saponification reaction proceeds and the vinyl ester units in the polymer are saponified and converted into vinyl alcohol units, the solubility in the solvent decreases, as a result of which the polymer precipitates in the solution. At this point, the solution contains methyl acetate generated by alcoholysis with methanol. As the saponification reaction proceeds, the amount of the precipitated

polymer gradually increases to bring the solution into the form of a slurry, resulting in the subsequent loss of fluidity. Therefore, in order to allow the saponification reaction to proceed uniformly, it is preferred to thoroughly mix the solution until the loss of fluidity.

A method of mixing the vinyl ester polymer solution and the saponification catalyst is not particularly limited, and various methods using a static mixer, a kneader, or a stirring blade can be employed; however, it is preferred to use a static mixer since it allows continuous and uniform mixing. In this case, a paste is preferably obtained by adding the saponification catalyst to the vinyl ester polymer solution after the polymerization step in a pipe connected to a polymerization tank, and subsequently mixing the solution through the static mixer. The temperature of the reaction liquid in the static mixer is usually 20 to 80°C.

A method of allowing a saponification reaction of the vinyl ester polymer in the paste passed through the static mixer is not particularly limited; however, a method in which the paste is placed on a moving belt and the saponification reaction is allowed to proceed while moving the belt in a tank maintained at a constant temperature is preferred. The paste on the belt loses its fluidity and assumes a solid state, and the saponification reaction further proceeds in this solid state. This method allows the saponification reaction to proceed continuously in the solid state, as a result of which a solid block containing the vinyl alcohol polymer and the solvent is obtained. The saponification temperature is suitably 20 to 60°C, preferably 25°C or higher, more preferably 30°C or higher, but preferably 55°C or lower, more preferably 50°C or lower. When the saponification temperature is equal to or higher than the above-described lower limit, a decrease in the reaction rate is likely to be inhibited. When the saponification temperature is equal to or lower than the above-described upper limit, a reduction in the content of the solvent in the resulting solid block is inhibited, so that deterioration of the solubility of the resulting vinyl alcohol polymer is likely to be inhibited. The saponification time is preferably 5 minutes to 2 hours. The saponification time is more preferably 8 minutes or longer, still more preferably 10 minutes or longer, but more preferably 1.5 hours or shorter, still more preferably 1 hour or shorter.

If necessary, for the purpose of removing impurities such as sodium acetate, the washing step may be added to wash the vinyl alcohol polymer. Examples of a washing liquid include methanol, acetone, methyl acetate, ethyl acetate, hexane, and water, among which methanol, methyl acetate, or water alone, or a mixed solution thereof is more preferred. Usually, the amount of the washing liquid is preferably 30 to 10,000 parts by mass, more preferably 50 to 3,000 parts by mass, with respect to 100 parts by mass of the vinyl alcohol polymer. The washing temperature is preferably 5 to 80°C, more preferably 20 to 70°C. The washing time is preferably 20 minutes to 10 hours, more preferably 1 hour to 6 hours. As a washing method, any known method such as a batch method or a counter-current washing method can be applied. It is noted here that, as the vinyl alcohol polymer, a commercially available product can be used as well.

<Nitrogen Element-Containing Compound (β)>

The PVA film of the present invention contains one or more nitrogen element-containing compounds (β). The compound (β) is a compound containing a nitrogen element (N element), and can impart optical properties (e.g., polarization performance or luminous performance) to the film. The nitrogen element-containing compound (β) is not limited as long as it contains an N element; however, the nitrogen element-containing compound (β) preferably has an aromatic ring from the standpoint of the ease of improving the water resistance and the optical properties of the PVA film as well as the moist heat resistance, the water resistance, and the optical properties of the stretched film. The aromatic ring may be, for example, an aromatic hydrocarbon ring or an aromatic heterocycle. The compound (β) may have one or more aromatic rings.

Examples of the aromatic hydrocarbon ring include monocyclic aromatic hydrocarbon rings, condensed polycyclic aromatic hydrocarbon rings, and ring-assembled aromatic hydrocarbon rings.

Examples of the monocyclic aromatic hydrocarbon rings include a benzene ring, and examples of the condensed polycyclic aromatic hydrocarbon rings include a naphthalene ring, an anthracene ring, a phenanthrene ring, a tetracene ring, a pyrene ring, a perylene ring, a tetracene ring, a benzpyrene ring, a chrysene ring, a triphenylene ring, an acenaphthene ring, a fluoranthene ring, and a fluorene ring. A "ring-assembled aromatic hydrocarbon ring" means a structure in which two or more monocyclic aromatic hydrocarbon rings, two or more condensed polycyclic aromatic hydrocarbon rings, or one or more monocyclic aromatic hydrocarbon rings and one or more condensed polycyclic aromatic hydrocarbon rings are bound to each other via single bonds, and examples thereof include a biphenyl ring, a phenylnaphthyl ring, a terphenyl ring, a perylene ring, a phenylanthracene ring, and a diphenylanthracene ring.

Examples of the aromatic heterocycle include monocyclic aromatic heterocycles, condensed polycyclic aromatic heterocycles, and ring-assembled aromatic heterocycles. The monocyclic aromatic heterocycles contain at least one heteroatom selected from a sulfur atom, a nitrogen atom, and an oxygen atom, and examples thereof include a pyrrole ring, a pyrazole ring, an imidazole ring, a pyridine ring, a pyrazine ring, a pyridazine ring, a pyrimidine ring, a triazine ring, an isocyanuric ring, a diazabenzene ring, a furan ring, a thiophene ring, an azole ring, a diazole ring, a triazole ring, an oxazole ring, an oxadiazole ring, and a thiadiazole ring. The condensed polycyclic aromatic heterocycles contain at least one heteroatom selected from a sulfur atom, a nitrogen atom, and an oxygen atom, and examples thereof include a BODIPY

ring, a fullerene ring, a porphyrin ring, an azanaphthalene (quinoline) ring, a diazanaphthalene ring, a carbazole ring, a dibenzofuran ring, a dibenzothiophene ring, a dibenzosilole ring, a phenoxazine ring, a phenothiazine ring, an acridine ring, an indole ring, a pyrroloimidazole ring, a pyrrolopyrazole ring, a pyrrolopyrrole ring, a thienopyrrole ring, a thienothiophene ring, a furopyrrole ring, a furofuran ring, a thienofuran ring, a thiazole ring, a benzisoxazole ring, a benzisothiazole ring, a benzimidazole ring, an isoquinoline ring, a cinnoline ring, a quinoxaline ring, a phenanthridine ring, a perimidine ring, a quinazoline ring, a quinazolinone ring, and an azulene ring. The "ring-assembled aromatic heterocycles" encompass not only structures in which two or more monocyclic aromatic heterocycles, two or more condensed polycyclic aromatic heterocycles, or one or more monocyclic aromatic heterocycles and one or more condensed polycyclic aromatic heterocycles are bound to each other via single bonds, but also structures in which one or more monocyclic aromatic hydrocarbon rings and one or more condensed polycyclic aromatic heterocycles, or one or more monocyclic aromatic heterocycles and one or more condensed polycyclic aromatic hydrocarbon rings are bound to each other via single bonds. Examples of the ring-assembled aromatic heterocycles include a bipyridine ring, a terpyridine ring, a tetraphenylporphyrin ring, and a phthalocyanine ring.

In one embodiment of the present invention, from the standpoint of the ease of improving the water resistance and the optical properties of the PVA film as well as the moist heat resistance, the water resistance, and the optical properties of the stretched film, the aromatic ring preferably contains at least one selected from a monocyclic aromatic hydrocarbon ring, a condensed polycyclic aromatic hydrocarbon ring, a ring-assembled aromatic hydrocarbon ring, a condensed polycyclic aromatic heterocycle, and a ring-assembled aromatic heterocycle. In one embodiment of the present invention, from the standpoint of the ease of improving the water resistance, the moist heat resistance, and the optical properties of the film, the aromatic ring preferably contains at least one selected from the group consisting of a benzene ring, a naphthalene ring, an anthracene ring, a pyrene ring, a perylene ring, a tetracene ring, a BODIPY ring, a porphyrin ring, a phthalocyanine ring, a biphenyl ring, a phenylnaphthyl ring, a phenylanthracene ring, a diphenylanthracene ring, and a tetraphenylporphyrin ring, more preferably contains at least one selected from the group consisting of a benzene ring, a naphthalene ring, a biphenyl ring, a diphenylanthracene ring, a porphyrin ring, and a tetraphenylporphyrin ring. When the aromatic ring contains any of a porphyrin ring, a phthalocyanine ring, and a fullerene ring, these rings may contain a metal atom, such as Pt, Pd, Zn, Ru, Re, Ir, Os, Cu, Ni, Co, Cd, Au, Ag, Sn, Sb, Pb, P, or As.

The aromatic ring may have a substituent (hereinafter, referred to as "substituent A"). The substituent A is not particularly limited, and examples thereof include a hydrogen atom, a halogen atom, an alkyl group, an alkylene group, an alkoxy group, an aryl group, an amino group, an alkylamino group, a hydroxyphenyl group, a carboxyphenyl group, a hydroxyl group, a cyano group, an alkylene oxide group, an ether group, an ester group, an azo group (-N=N-), a carboxyl group or a salt thereof, and a sulfo group or a salt thereof. The aromatic ring may have one or more substituents A.

Examples of the halogen atom include a fluorine atom, a chlorine atom, a bromine atom, and an iodine atom. Examples of the alkyl group include alkyl groups having 1 to 12 carbon atoms, such as a methyl group, an ethyl group, an n-propyl group, an isopropyl group, an n-butyl group, an isobutyl group, a *sec*-butyl group, a *tert*-butyl group, an n-pentyl group, a 2-methylbutyl group, a 3-methylbutyl group, a 2-ethylpropyl group, and an n-hexyl group, preferably alkyl groups having 1 to 8 carbon atoms. Examples of the alkylene group include alkylene groups having 1 to 10 carbon atoms, such as an ethylene group, a propylene group, a trimethylene group, a butylene group, an isobutylene group, a pentylene group, a hexylene group, a heptylene group, an octylene group, a nonylene group, and a decylene group, preferably alkylene groups having 1 to 5 carbon atoms. Examples of the alkoxy group include alkoxy groups having 1 to 12 carbon atoms, such as a methoxy group, an ethoxy group, a propyloxy group, an isopropyloxy group, an n-butoxy group, an isobutoxy group, a *sec*-butoxy group, a tert-butoxy group, a pentyloxy group, a hexyloxy group, and a cyclohexyloxy group, preferably alkoxy groups having 1 to 8 carbon atoms, more preferably alkoxy groups having 1 to 4 carbon atoms. Examples of the aryl group include a phenyl group, a tolyl group, a naphthyl group, and a biphenyl group. Examples of the alkylamino group include amino groups having an alkyl chain with 1 to 12 carbon atoms, preferably amino groups having an alkyl chain with 1 to 8 carbon atoms. Examples of the alkylene oxide group include an ethylene oxide group and a propylene oxide group.

In one preferred embodiment of the present invention, from the standpoint of the ease of improving the water resistance and the optical properties of the PVA film as well as the moist heat resistance, the water resistance, and the optical properties of the stretched film, the nitrogen element-containing compound (β) preferably contains at least one selected from the group consisting of a compound represented by the following Formula (1), a compound represented by the following Formula (2), and a compound represented by the following Formula (6), more preferably contains a compound represented by the following Formula (1).

$$Ar^a\text{-}N{=}N\text{-}Ar^b\text{-}N{=}N\text{-}Ar^c \qquad (1)$$

[in Formula (1), $Ar^a$, $Ar^b$, and $Ar^c$ each independently represent an aryl group optionally having a substituent]

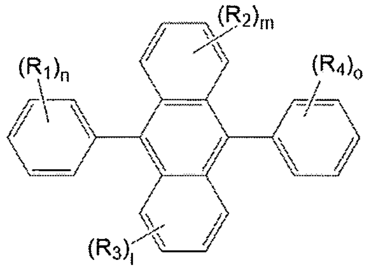

(2)

[in Formula (2), $R_1$ to $R_4$ each independently represent a hydrogen atom, a cyano group, a halogen atom, an amino group having an alkyl chain with 1 to 8 carbon atoms, an alkyl group having 1 to 12 carbon atoms, an alkoxy group having 1 to 12 carbon atoms, an ethylene oxide chain represented by the following Formula (3) or (4), or an ammonium ion represented by the following Formula (5); l and m each independently represent an integer of 1 to 4; and n and o each independently represent an integer of 1 to 5]

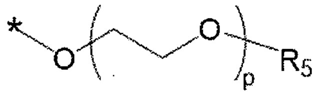

(3)

[in Formula (3), $R_5$ represents an alkyl group having 1 to 3 carbon atoms; p represents an integer of 1 to 4; and * represents a bond]

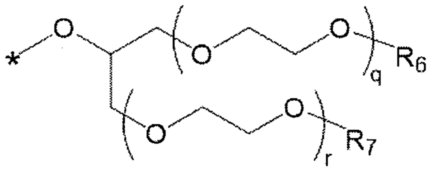

(4)

[in Formula (4), $R_6$ and $R_7$ each independently represent an alkyl group having 1 to 3 carbon atoms; q and r each independently represent an integer of 1 to 4; and * represents a bond]

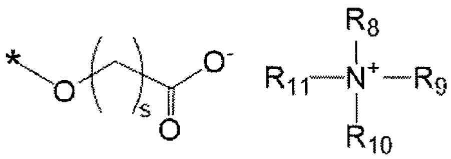

(5)

[in Formula (5), s represents an integer of 1 to 8; $R_8$ to $R_{11}$ each independently represent an alkyl group having 1 to 6 carbon atoms; and * represents a bond]

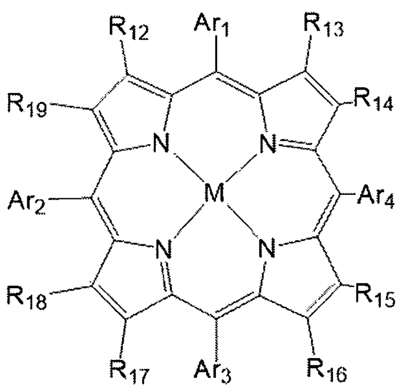

(6)

[in Formula (6), $R_{12}$ to $R_{19}$ each independently represent a hydrogen atom, a cyano group, a halogen atom, an amino group having an alkyl chain with 1 to 8 carbon atoms, an alkyl group having 1 to 12 carbon atoms, an alkoxy group having 1 to 12 carbon atoms, or an ethylene oxide chain represented by the following Formula (7); M represents a

hydrogen atom, palladium, platinum, copper, or zinc; and $Ar_1$ to $Ar_4$ each independently represent a hydrogen atom, a substituent represented by the following Formula (8), (9), or (10), or an ammonium ion represented by the following Formula (11)]

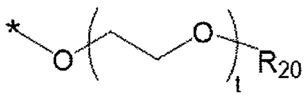 (7)

[in Formula (7), $R_{20}$ represents an alkyl group having 1 to 3 carbon atoms; t represents an integer of 1 to 4; and * represents a bond]

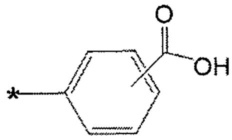 (8)

[in Formula (8), * represents a bond]

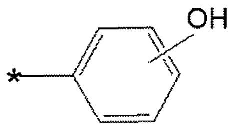 (9)

[in Formula (9), * represents a bond]

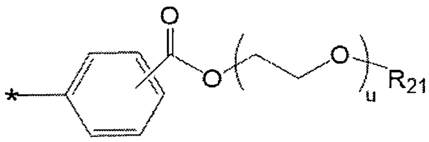 (10)

[in Formula (10), $R_{21}$ represents an alkyl group having 1 to 3 carbon atoms; u represents an integer of 1 to 4; and * represents a bond]

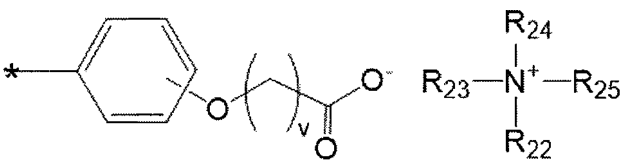 (11)

[in Formula (11), v represents an integer of 1 to 8; $R_{22}$ to $R_{25}$ each independently represents an alkyl group having 1 to 6 carbon atoms; and * represents a bond].

The aryl groups represented by $Ar^a$, $Ar^b$, and $Ar^c$ in Formula (1) may each be, for example, a group obtained by removal of one hydrogen atom from the above-described aromatic ring, preferably a group obtained by removal of one hydrogen atom from a benzene ring, a naphthalene ring, or a biphenyl ring. Examples of the substituent that the aryl group optionally has include those exemplified above as the substituent A.

In one preferred embodiment, $Ar^a$, $Ar^b$, and $Ar^c$ in Formula (1) are represented by the following Formula (a), Formula (b), and Formula (c), respectively.

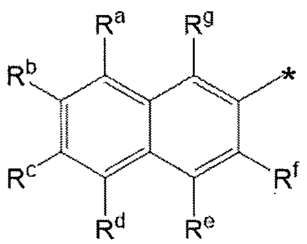
(a)

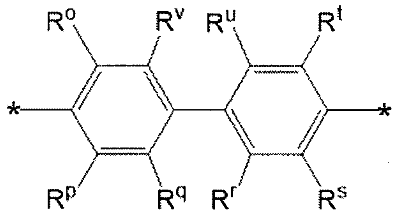
(b)

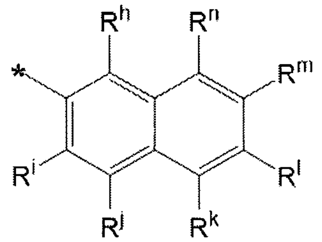
(c)

[wherein, $R^a$ to $R^v$ each independently represent a hydrogen atom, a halogen atom, an alkyl group, an alkoxy group, an aryl group, an amino group, a hydroxyl group, a sulfo group, or a salt thereof; and * represents a bond]

Examples of the alkyl group, the alkoxy group, and the aryl group that are represented by $R^a$ to $R^v$ include those exemplified above as the alkyl group, the alkoxy group, and the aryl group of the substituent A, respectively.

In one embodiment of the present invention, from the standpoint of the ease of improving the water resistance of the PVA film as well as the optical properties (particularly the polarization performance), the water resistance, and the moist heat resistance of the stretched film, it is preferred that $R^b$, $R^d$, $R^e$, $R^m$, $R^k$, $R^j$, $R^p$, $R^q$, $R^r$, $R^s$, $R^v$, and $R^u$ each represent a hydrogen atom, and $R^a$, $R^c$, $R^f$, $R^q$, $R^h$, $R^i$, $R^l$, $R^n$, $R^o$, and $R^t$ each independently represent a hydrogen atom, a halogen atom, an alkyl group, an alkoxy group, an aryl group, an amino group, a hydroxyl group, a sulfo group, or a salt thereof; it is more preferred that $R^b$, $R^d$, $R^e$, $R^m$, $R^k$, $R^j$, $R^p$, $R^q$, $R^r$, $R^s$, $R^v$, and $R^u$ each represent a hydrogen atom, $R^o$ and $R^t$ each represent an alkoxy group, and $R^a$, $R^c$, $R^f$, $R^g$, $R^h$, $R^i$, $R^l$, and $R^n$ each independently represent an amino group, a hydroxyl group, a sulfo group, or a salt thereof; and it is still more preferred that $R^b$, $R^d$, $R^e$, $R^m$, $R^k$, $R^j$, $R^p$, $R^q$, $R^r$, $R^s$, $R^v$, and $R^u$ each represent a hydrogen atom, $R^o$ and $R^t$ each represent an alkoxy group, $R^c$ and $R^l$ each represent a sulfo group or a salt thereof, $R^a$ and $R^n$ each represent an amino group, and $R^g$ and $R^h$ each represent a hydroxyl group.

Examples of the compound represented by Formula (1) include: DIRECT BLACK 17, 19, and 154; DIRECT BROWN 44, 106, 195, 210, and 223; DIRECT RED 2, 23, 28, 31, 37, 39, 79, 81, 240, 242, and 247; DIRECT BLUE 1, 15, 22, 78, 90, 98, 151, 168, 202, 236, 249, and 270; DIRECT VIOLET 9, 12, 51, and 98; DIRECT GREEN 1 and 85; DIRECT YELLOW 8, 12, 44, 86, and 87; and DIRECT ORANGE 26, 39, 106, and 107. Thereamong, from the standpoint of the ease of improving the water resistance of the PVA film as well as the optical properties (particularly the polarization performance), the water resistance, and the moist heat resistance of the stretched film, the compound represented by Formula (1) is preferably DIRECT BLUE 15.

The nitrogen element-containing compound (β) that has an alkoxy group; an alkylene oxide chain, such as an ethylene oxide chain or a propylene oxide chain; a hydroxy group; a carboxyl group; an amino group; and a hydrophilic group such as an ammonium ion is water-soluble and, therefore, can be suitably used in wet stretching of films. The degree of water solubility can be controlled by appropriately selecting, for example, the number of these functional groups and the length of the alkylene oxide chain. The compound represented by Formula (1), the compound represented by Formula (2), and the compound represented by Formula (3) may each be produced by a commonly used method, or may be commercially available products.

The compound (β) is not particularly limited; however, it is preferably a dye or a pigment. In one embodiment of the present invention, when the compound (β) is a dye or a pigment, the compound (β) can act as a dichroic pigment; therefore, the stretched film obtained by stretching the PVA film can be a polarizing film. In one embodiment of the present invention, when the compound (β) is a dye or a pigment, by incorporating two or more compounds (β) that function as donors or acceptors, the PVA film can be a photon up-conversion film. For example, when the compound (β) contains a compound represented by Formula (1), the compound (β) is likely to function as a dichroic pigment, while when the compound (β) contains a compound represented by Formula (2) and a compound represented by Formula (3), these compounds are likely to function as a donor and an acceptor of a photon up-conversion film, respectively. It is noted here that "photon up-conversion" refers to a phenomenon of converting a low-energy light into a high-energy light. The term "optical properties" used herein refers to optical characteristics, meaning the polarization performance and the like when the stretched film obtained by stretching the PVA film is a polarizing film, or luminous efficiency and the like when the stretched film is a photon up-conversion film.

The content of the nitrogen element-containing compound (β) is preferably 0.01 parts by mass or more, more preferably 0.05 parts by mass or more, still more preferably 0.07 parts by mass or more, yet still more preferably 0.1 parts by mass or more, but preferably 20 parts by mass or less, more preferably 15 parts by mass or less, still more preferably 10 parts by mass or less, yet still more preferably 5 parts by mass or less, particularly preferably 1 part by mass or less, with respect to 100 parts by mass of the PVA resin (α). When the content of the compound (β) is equal to or more than the above-described lower limit, the optical properties of the film are likely to be improved, while when the content of the compound (β) is equal to or less than the above-described upper limit, a film can be easily produced with good productivity while reducing the production cost of the film. The content of the compound (β) based on the mass of the PVA film may also be selected

from the above-described range.

<PVA Film>

The PVA film of the present invention is excellent in water resistance since it contains the PVA resin (α) and the nitrogen element-containing compound (β), and satisfies the above-described Equation (I). Accordingly, when the PVA film is, for example, stretched in an aqueous bath, the release of the compound (β) from the surface layer of the film can be inhibited, so that the concentration of the compound (β) in the entire film can be easily adjusted, and contamination of the aqueous bath can be prevented. Further, the PVA film of the present invention can yield a stretched film having excellent moist heat resistance. Thus, even when the stretched film is exposed to a high-temperature and high-humidity condition for an extended period, problems such as decomposition of the compound (β) can be inhibited. Moreover, the PVA film of the present invention can yield a stretched film having excellent water resistance, and the release of the compound (β) from the surface layer of the stretched film in water or an aqueous solution can be inhibited. Accordingly, when treating the stretched film in an aqueous bath, contamination of the aqueous bath can be prevented. Therefore, the PVA film of the present invention can be suitably used as a polarizing film, a photon up-conversion film, and the like.

As described above, the PVA film of the present invention has excellent water resistance and can inhibit the release of compound (β) in an aqueous solution. Therefore, when the PVA film is immersed in 30°C pure water for 5 minutes and then taken out, the absorbance X of this pure water is low. In the present specification, the "absorbance X" is a maximum absorbance value in the visible light wavelength region (380 to 750 nm) of pure water after immersion of the PVA film therein. Usually, the wavelength (maximum absorption wavelength) at the absorbance X coincides with the maximum absorption wavelength of the compound (β) released in the pure water. In one embodiment of the present invention, the absorbance X (Abs) of pure water after immersion of the PVA film therein is preferably 0.01 or less, more preferably 0.005 or less, still more preferably 0.003 or less. The absorbance X can be measured by, for example, the method described below in the section of Examples.

As described above, the PVA film of the present invention can yield a stretched film having excellent moist heat resistance. Therefore, when the compound (β) is a dye or a pigment, a change in dichroic ratio before and after a moist heat resistance test (hereinafter, may be referred to as "Δ dichroic ratio") can be inhibited. In one embodiment of the present invention, the Δ dichroic ratio before and after leaving the PVA film of the present invention to stand in an atmosphere having a temperature of 60°C and a humidity of 90% for 500 hours is preferably lower than 10, more preferably 8 or lower, still more preferably 6 or lower, and may be, for example, 5 or lower, or 4 or lower. The Δ dichroic ratio can be measured by, for example, the method described below in the section of Examples.

As described above, the PVA film of the present invention can yield a stretched film having excellent water resistance. Therefore, when the stretched film is immersed in 50°C pure water for 15 minutes and then taken out, the absorbance Y of this pure water is low. In the present specification, the "absorbance Y" is a maximum absorbance value in the visible light wavelength region (380 to 750 nm) of pure water after immersion of the stretched film therein. Usually, the wavelength (maximum absorption wavelength) at the absorbance Y coincides with the maximum absorption wavelength of the compound (β) released in the pure water. In one embodiment of the present invention, the absorbance Y (Abs) of pure water after immersion of the stretched film therein is preferably 0.003 or less, more preferably 0.002 or less. The absorbance Y can be measured by, for example, the method described below in the section of Examples.

The PVA film of the present invention may further contain a plasticizer. Examples of the plasticizer include polyhydric alcohols, such as ethylene glycol, glycerin, propylene glycol, diethylene glycol, diglycerin, triethylene glycol, tetraethylene glycol, and trimethylolpropane, and the PVA film of the present invention may contain one or more of these plasticizers. Thereamong, glycerin is preferred from the standpoint of improving the stretchability.

When the PVA film of the present invention contains a plasticizer, the content of the plasticizer is preferably 1 part by mass or more, more preferably 3 parts by mass or more, still more preferably 5 parts by mass or more, yet still more preferably 7 parts by mass or more, but preferably 30 parts by mass or less, more preferably 25 parts by mass or less, still more preferably 20 parts by mass or less, yet still more preferably 15 parts by mass or less, particularly preferably 12 parts by mass or less, with respect to 100 parts by mass of the PVA resin (α). When the content of the plasticizer is equal to or more than the above-described lower limit, the stretchability of the PVA film is likely to be improved, while when the content of the plasticizer is equal to or less than the above-described upper limit, it is advantageous in terms of the ease of handling. The content of the plasticizer based on the mass of the PVA film may also be selected from the above-described range.

The PVA film of the present invention may further contain a surfactant. By incorporating a surfactant, the film-forming properties in the film production are improved, so that the occurrence of unevenness in the thickness of the PVA film is likely to be inhibited, and the PVA film can be more easily peeled off from a roll or a belt used in the film production. Among surfactants, from the standpoint of improving the peelability from a roll, a belt, or the like in the film production, an anionic surfactant or a nonionic surfactant is preferred.

Examples of the anionic surfactant include: carboxylic acid-type anionic surfactants, such as potassium laurate; sulfate-type anionic surfactants, such as polyoxyethylene lauryl ether sulfate and octyl sulfate; and sulfonic acid-type

anionic surfactants, such as dodecylbenzenesulfonate.

Preferred examples of the nonionic surfactant include: alkyl ether-type nonionic surfactants, such as polyoxyethylene oleyl ether; alkyl phenyl ether-type nonionic surfactants, such as polyoxyethylene octyl phenyl ether; alkyl ester-type nonionic surfactants, such as polyoxyethylene laurate; alkylamine-type nonionic surfactants, such as polyoxyethylene lauryl amino ether; alkylamide-type nonionic surfactants, such as polyoxyethylene lauric acid amide; polypropylene glycol ether-type nonionic surfactants, such as polyoxyethylene polyoxypropylene ether; alkanolamide-type nonionic surfactants, such as oleic acid diethanolamide; and allyl phenyl ether-type nonionic surfactants, such as polyoxyalkylene allyl phenyl ether. These surfactants may be used singly, or in combination of two or more thereof.

When the PVA film of the present invention contains a surfactant, the content of the surfactant is preferably 0.01 parts by mass or more, more preferably 0.02 parts by mass or more, still more preferably 0.05 parts by mass or more, but preferably 5 parts by mass or less, more preferably 1 part by mass or less, still more preferably 0.5 parts by mass or less, yet still more preferably 0.3 parts by mass or less, with respect to the PVA resin ($\alpha$). When the content of the surfactant is equal to or more than the above-described lower limit, the film-forming properties and the peelability in the film production are likely to be improved. When the content of the surfactant is equal to or less than the above-described upper limit, the surfactant can be prevented from bleeding out on the film surface and causing blocking, so that the ease of handling is likely to be improved. The content of the surfactant based on the mass of the PVA film may also be selected from the above-described range.

If necessary, the PVA film of the present invention may further contain additives, such as antioxidants, antifreezing agents, pH modifiers, masking agents, color inhibitors, oil agents, and resins other than the PVA resin. When the PVA film contains such additives, the content thereof is preferably 10% by mass or less, more preferably 5% by mass or less, still more preferably 1% by mass or less, but preferably 0.01% by mass or more, with respect to the mass of the PVA film.

The PVA film of the present invention may be a monolayer film or a multilayer film, as long as it satisfies Equation (I). Films constituting the multilayer film may be the same or different from each other in terms of composition and thickness. In the multilayer film, the interfaces between films may be completely or partially invisible. In other words, the interfaces between films may disappear during the production, giving a monolayer film appearance. When the PVA film of the present invention is a multilayer film, the PVA resin ($\alpha$) and the compound ($\beta$) are each contained in at least one of the films constituting the multilayer film such that the multilayer film itself satisfies Equation (I), and it is preferred that the PVA resin ($\alpha$) be contained in all of the films. Further, when the PVA film of the present invention is a multilayer film, the mass of the PVA film, which serves as a reference for the content of each of the PVA resin ($\alpha$) and additives, means the mass of the entire multilayer film, and the mass of the PVA resin ($\alpha$), which serves as a reference for the content of each of the compound ($\beta$), the plasticizer, and the surfactant, means the mass of the PVA resin ($\alpha$) contained in the entire multilayer film (i.e., a total amount of the PVA resin ($\alpha$) contained in the multilayer film). The contents of these components may be calculated taking into consideration the amounts added during the formation of the multilayer film, as well as the thickness and the like of each layer or film constituting the multilayer film.

As a method of adjusting the signal intensity ratio to be in the range of Equation (I), for example, when the PVA film is a multilayer film, a method of adjusting the order, the composition, and the thickness of layers or films such that a portion having a high concentration of the compound ($\beta$) based on the concentration of the PVA resin ($\alpha$) is positioned within a central 60% portion of the film in the thickness direction may be employed; or when the PVA film is a monolayer film, a method of partially removing the compound ($\beta$) from the PVA film containing the compound ($\beta$) such that a portion having a high concentration of the compound ($\beta$) based on the concentration of the PVA resin ($\alpha$) is positioned within a central 60% portion of the film in the thickness direction may be employed.

From the standpoint of the ease of adjusting the concentration of the compound ($\beta$) in the thickness direction of the film and the ease of adjusting the signal intensity ratio to be in the range of Equation (I), the PVA film is preferably a multilayer film. As described above, the multilayer film may be a multilayer film whose interfaces are not visible, i.e., a multilayer film that appears to be a monolayer film.

Specific examples of the monolayer film include a monolayer PVA film that contains the PVA resin ($\alpha$) and the compound ($\beta$). Examples of the multilayer film include:

a PVA film A that includes a PVA film 1 containing a PVA resin ($\alpha$1), a PVA resin layer containing a PVA resin ($\alpha$3) and the compound ($\beta$), and a PVA film 2 containing a PVA resin ($\alpha$2) in the order mentioned; and

a PVA film B that includes a PVA film 1 containing a PVA resin ($\alpha$1), a PVA resin layer containing a PVA resin ($\alpha$3) and a compound ($\beta$1), a PVA film 2 containing a PVA resin ($\alpha$2), a PVA resin layer containing a PVA resin ($\alpha$4) and a compound ($\beta$2), and a PVA film 3 containing a PVA resin ($\alpha$5) in the order mentioned.

Thereamong, the PVA film A is more preferred from the standpoint of the ease of improving the water resistance of the PVA film as well as the moist heat resistance and the water resistance of the stretched film. It is noted here that the PVA resins ($\alpha$1) to ($\alpha$5) are each a PVA resin selected from the above-described PVA resin ($\alpha$). Further, the compounds

(β1) and (β2) are each a nitrogen element-containing compound selected from the above-described compound (β).

In the PVA film A, from the standpoint of the ease of improving the water resistance of the PVA film as well as the moist heat resistance and the water resistance of the stretched film, the PVA resin (α3) is preferably the same as at least one selected from the group consisting of the PVA resin (α1) and the PVA resin (α2), more preferably the same as both of the PVA resin (α1) and the PVA resin (α2). In the PVA film A, the PVA film 1 and the PVA film 2 do not contain the compound (β) as an essential component; however, the PVA film 1 and/or the PVA film 2 may contain the compound (β) within a range that satisfies Equation (I).

In the PVA film B, from the standpoint of the ease of improving the water resistance of the PVA film as well as the moist heat resistance and the water resistance of the stretched film, the PVA resin (α3) and the PVA resin (α4) are preferably the same as at least one selected from the group consisting of the PVA resin (α1), the PVA resin (α2), and the PVA resin (α5), more preferably the same as at least two of the PVA resin (α1), the PVA resin (α2), and the PVA resin (α5), still more preferably the same as all of the PVA resin (α1), the PVA resin (α2), and the PVA resin (α5). Further, the PVA resin (α3) and the PVA resin (α4) may be the same or different. Moreover, the compounds (β1) and (β2) may be the same or different; however, from the standpoint of the ease of improving the water resistance of the PVA film as well as the moist heat resistance and the water resistance of the stretched film, the compounds (β1) and (β2) are preferably the same. In the PVA film B, the PVA films 1, 2, and 3 do not contain the compound (β) as an essential component; however, at least one of the PVA films 1, 2, and 3 may contain the compound (β) within a range that satisfies Equation (I).

When the PVA film of the present invention is a multilayer film, the number of films and layers constituting the multilayer film is not particularly limited; however, it is preferably 2 or more, more preferably 3 or more, but preferably 9 or less, more preferably 7 or less, still more preferably 5 or less. From the standpoint of the ease of improving the stretchability and the water resistance of the PVA film as well as the moist heat resistance and the water resistance of the stretched film, it is preferred that all of the films and layers constituting the multilayer film contain a PVA resin.

The PVA film of the present invention may include other film or layer on one or both sides.

The thickness of the PVA film of the present invention can be selected as appropriate in accordance with the intended use, and it is preferably 1 μm or more, more preferably 5 μm or more, still more preferably 10 μm or more, yet still more preferably 20 μm or more, particularly preferably 30 μm or more, particularly more preferably 40 μm or more, but preferably 250 μm or less, more preferably 150 μm or less, still more preferably 100 μm or less, yet still more preferably 80 μm or less. When the thickness of the PVA film is equal to or more than the above-described lower limit, the PVA film is unlikely to be broken when stretched, and the water resistance of the PVA film as well as the moist heat resistance and the water resistance of the stretched film are likely to be improved. Meanwhile, when the thickness of the PVA film is equal to or less than the above-described upper limit, a stretched film can be easily produced with good productivity, and it is advantageous from the standpoint of optical properties and reduction in film thickness. When the PVA film is a multilayer film, the thickness of the PVA film means the thickness of the multilayer film itself (i.e., a total thickness of films constituting the multilayer film). The thickness of the PVA film can be measured using a film thickness meter by, for example, the method described below in the section of Examples.

[Method of Producing Polyvinyl Alcohol Film]

A method of producing the PVA film of the present invention is not particularly limited and may be, for example, a method of laminating layers or films such that Equation (I) is satisfied. The production method of the present invention will now be described referring to a preferred embodiment of the present invention; however, the present invention is not limited to the below-described embodiment.

In a preferred embodiment of the present invention, the PVA film of the present invention can be produced by a method that includes the step of laminating a PVA film 1 that contains a PVA resin (α1) and a PVA film 2 that contains a PVA resin (α2) via an aqueous PVA resin solution (hereinafter, may be referred to as "PVA aqueous solution") that contains a PVA resin (α3) and a compound (β). The resulting PVA film is the above-described PVA film A [PVA film 1/PVA resin layer/PVA film 2]. In this layer configuration, since all of the films and layers contain a PVA resin, the interfaces between the respective films and layers may not be observed.

The PVA film 1 used in the above-described step can be obtained by forming a film from a film-forming stock solution containing the PVA resin (α1). Similarly, the PVA film 2 can be obtained by forming a film from a film-forming stock solution containing the PVA resin (α2).

The film-forming stock solutions can each be prepared by mixing the PVA resin (α1) or the PVA resin (α2), optionally with the above-described plasticizer, surfactant, and additives, and a liquid solvent. Examples of the liquid solvent include water, dimethyl sulfoxide, dimethylformamide, dimethylacetamide, N-methylpyrrolidone, ethylene glycol, glycerin, propylene glycol, diethylene glycol, triethylene glycol, tetraethylene glycol, trimethylolpropane, ethylenediamine, and diethylenetriamine. These liquid solvents may be used singly, or in combination of two or more thereof. Thereamong, water can be preferably used from the standpoint of environmental load and recoverability.

The volatile content (water content) of each film-forming stock solution varies depending on the film-forming

method, the film-forming conditions, and the like; however, generally, it is preferably 50 to 95% by mass, more preferably 55 to 85% by mass, still more preferably 60 to 80% by mass. When the volatile content of the film-forming stock solution is equal to or more than the above-described lower limit, an excessive increase in the viscosity of the film-forming stock solution, which makes it difficult to perform filtration and degassing in the preparation of the film-forming stock solution, can be easily inhibited, and this is advantageous in terms of producing a film with few foreign matters and defects. Meanwhile, when the volatile content of the film-forming stock solution is equal to or less than the above-described upper limit, an excessive reduction in the concentration of the film-forming stock solution, which makes the industrial film production difficult, can be easily inhibited.

As a film-forming method using such a film-forming stock solution, for example, a wet film-forming method, a gel film-forming method, a casting film-forming method, or an extrusion film-forming method can be employed. A combination of these methods can be employed as well. Among these film-forming methods, a casting film-forming method or an extrusion film-forming method is preferred since it is likely to yield a PVA film that is uniform in thickness and width and has good physical properties.

Specific examples of the film-forming method include, but not particularly limited to: a method of forming a film by uniformly discharging a film-forming stock solution onto the peripheral surface of a rotating heated roll or belt using a T-shaped slit die, a hopper plate, an I-die, a lip coater die, or the like, and then evaporating volatile components from one side of the film discharged onto the roll or belt and thereby drying the film; and a method of forming a film by, after drying a film in the aforementioned manner, further drying the film on the peripheral surface of one or more rotating rolls, or further drying the film by passing it through a hot air dryer. In addition, after the film is peeled off from the roll(s), the film may be heat-treated with another roll or hot air.

The roll or belt used for the film formation has a surface temperature of preferably 50°C or higher, more preferably 60°C or higher, still more preferably 65°C or higher, yet still more preferably 70°C or higher, but preferably 120°C or lower, more preferably 100°C or lower, still more preferably 95°C or lower, yet still more preferably 90°C or lower. When the surface temperature is equal to or higher than the above-described lower limit, water can be easily removed with good productivity. Meanwhile, when the surface temperature is equal to or lower than the above-described upper limit, the occurrence of surface unevenness caused by rapid evaporation of water is likely to be inhibited.

In this manner, the PVA films 1 and 2 used in the above-described step can be produced.

The PVA aqueous solution used in the above-described step can be prepared by mixing the above-described PVA resin ($\alpha$3) and compound ($\beta$), optionally with the above-described plasticizer, surfactant, additives, and liquid solvent. The content of the PVA resin in the PVA aqueous solution is not particularly limited; however, it may be, for example, 1 to 50% by mass, preferably 3 to 20% by mass, with respect to the mass of the PVA aqueous solution. When the content of the PVA resin ($\alpha$3) is in the above-described range, the adhesion between the PVA film 1 and the PVA film 2 is likely to be improved, so that a PVA film having excellent adhesion is likely to be obtained.

In the above-described step of the present invention, the PVA film 1 and the PVA film 2 are laminated via the PVA aqueous solution. Examples of a lamination method include, but not particularly limited to: a method of pasting together the PVA film 1 and the PVA film 2 using a laminator, a nip roll, or the like, while dropping the PVA aqueous solution between the films; and a method of dropping or applying the PVA aqueous solution onto one or both of the PVA film 1 and the PVA film 2, and subsequently pasting together these films. Between these methods, from the standpoint of the ease of adjusting the signal intensity ratio to be in the range of Equation (I), the method of pasting together the PVA film 1 and the PVA film 2 using a laminator or the like while dropping the PVA aqueous solution between the films is preferred. The temperature during the pasting, e.g., the lamination temperature, can be selected as appropriate in accordance with the compositions, the combination, and the like of the films to be pasted together, and it is preferably 15 to 40°C, more preferably 15 to 30°C. After the films are laminated, the films may be dried using a dryer or the like. The drying temperature is not particularly limited and may be, for example, 30 to 100°C, preferably 40 to 80°C.

In one embodiment of the present invention, the PVA resin ($\alpha$3) contained in the PVA film A is preferably the same as at least one selected from the group consisting of the PVA resin ($\alpha$1) and the PVA resin ($\alpha$2), more preferably the same as both of the PVA resin ($\alpha$1) and the PVA resin ($\alpha$2). In this mode, problems in handling such as curling are unlikely to occur.

In the above-described embodiment, the PVA films 1 and 2 do not contain the compound ($\beta$); however, the PVA films 1 and 2 may contain the compound ($\beta$) as long as Equation (I) is satisfied. Further, the thickness of the PVA film 1 and that of the PVA film 2 may be the same or different; however, from the standpoint of the ease of adjusting the signal intensity ratio to be in the range of Equation (I), the PVA films 1 and 2 preferably have the same thickness.

The PVA films 1 and 2 each have a thickness of preferably 0.5 $\mu$m or more, more preferably 3 $\mu$m or more, still more preferably 5 $\mu$m or more, yet still more preferably 10 $\mu$m or more, particularly preferably 15 $\mu$m or more, particularly more preferably 20 $\mu$m or more, but preferably 130 $\mu$m or less, more preferably 80 $\mu$m or less, still more preferably 50 $\mu$m or less, yet still more preferably 40 $\mu$m or less.

From the standpoint of the ease of improving the adhesion of the films, the PVA resin layer formed from the PVA aqueous solution has a thickness of preferably 0.30 $\mu$m or more, more preferably 0.40 $\mu$m or more, still more preferably

0.50 μm or more, but preferably 20 μm or less, more preferably 10 μm or less, still more preferably 5 μm or less, yet still more preferably 3 μm or less.

[Stretched Film]

The present invention encompasses a stretched film that contains a PVA resin (α) and a nitrogen element-containing compound (β), and satisfies the following Equation (II):

$$(G/H)/(E/F) > 3 \qquad (II)$$

[wherein, when at least 20 points equally spaced in the thickness direction are measured by a TOF-SIMS within a central 60% range of the stretched film in the thickness direction and, in the thus obtained measurement data, points where an intensity value of a $CN^-$ signal derived from the nitrogen element-containing compound (β) is maximum and minimum are defined as $P_{MAX}$ and $P_{min}$, respectively:

E represents an intensity value of the $CN^-$ signal derived from the nitrogen element-containing compound (β) at $P_{min}$;
F represents an intensity value of a $C_2H_3O_2^-$ signal derived from the polyvinyl alcohol resin (α) at $P_{min}$;
G represents an intensity value of the $CN^-$ signal derived from the nitrogen element-containing compound (β) at $P_{MAX}$; and
H represents an intensity value of the $C_2H_3O_2^-$ signal derived from the polyvinyl alcohol resin (α) at $P_{MAX}$].

The present inventors discovered that, when a signal intensity ratio (G/H)/(E/F) is higher than 3 in a stretched film containing a PVA resin (α) and a compound (β), the moist heat resistance can be improved, and problems such as decomposition of the compound (β) can be inhibited even if the stretched film is left under a high-temperature and high-humidity condition for an extended period. The present inventors also discovered that, when the signal intensity ratio (G/H)/(E/F) is higher than 3, since the water resistance can also be improved and the release of the compound (β) in water or an aqueous solution can be inhibited, for example, contamination of an aqueous bath can be prevented during a treatment of the stretched film in the aqueous bath. This is presumably because a stretched film satisfying Equation (II) has a high concentration of the compound (β) in a central portion of the thickness direction, and the compound (β) in the film is thus unlikely to be affected by the external environment.

When the signal intensity ratio (G/H)/(E/F) is 3 or lower, the moist heat resistance and the water resistance of the stretched film tend to be deteriorated. In the stretched film of the present invention, the signal intensity ratio (G/H)/(E/F) can be selected as appropriate in accordance with the concentration of the compound (β) and the like, and it is preferably 4 or higher, more preferably 5 or higher, still more preferably 7 or higher, and may be, for example, 10 or higher, 13 or higher, 15 or higher, or 17 or higher. When the signal intensity ratio (G/H)/(E/F) is equal to or higher than the above-described lower limit, the moist heat resistance and the water resistance of the stretched film can be improved. Meanwhile, the signal intensity ratio (G/H)/(E/F) is preferably 300 or lower, more preferably 100 or lower, still more preferably 50 or lower, yet still more preferably 40 or lower, particularly preferably 25 or lower. When the signal intensity ratio (G/H)/(E/F) is equal to or lower than the above-described upper limit, a film can be produced with good productivity while reducing the production cost of the film.

In one embodiment of the present invention, the position of G in Equation (I) is preferably within a central 50% range, more preferably within a central 40% range, still more preferably within a central 30% range, yet still more preferably within a central 20%, in the film thickness direction. When the position of G is in this range, the concentration of the compound (β) tends to be higher in the central portion; therefore, the stretched film is likely to have a high moist heat resistance and a high water resistance. Further, in one embodiment of the present invention, the position of E in Equation (I) is preferably within a central 20 to 60% range, more preferably within a central 30 to 60% range, still more preferably within a central 40 to 60% range, in the film thickness direction. When the position of E is in this range, the stretched film tends to have a high moist heat resistance and a high water resistance.

The left-hand side of Equation (II) is obtained by replacing (C/D)/(A/B) in Equation (I) with (G/H)/(E/F), and can be determined by performing TOF-SIMS measurement in the same manner as in Equation (I).

The PVA resin (α) contained in the stretched film satisfying Equation (II) is the same as the PVA resin (α) contained in the PVA film satisfying Equation (I).

Further, the nitrogen element-containing compound (β) contained in the stretched film satisfying Equation (II) is the same as the nitrogen-containing compound (β) contained in the PVA film satisfying Equation (I). In other words, it is preferred that the nitrogen element-containing compound (β) contained in the stretched film have the above-described aromatic ring and/or be a dye or a pigment.

In one embodiment of the present invention, the content of the PVA resin (α) in the stretched film is preferably 65%

by mass or more, more preferably 70% by mass or more, still more preferably 80% by mass or more, yet still more preferably 85% by mass or more, particularly preferably 90% by mass or more, particularly more preferably 95% by mass or more, particularly still more preferably 97% by mass or more, but preferably 99.99% by mass or less, more preferably 99.9% by mass or less, with respect to the mass of the stretched film. When the content of the PVA resin (α) is equal to or more than the above-described lower limit, the mechanical strength, the moist heat resistance, and the water resistance of the stretched film are likely to be improved, while when the content of the PVA resin (α) is equal to or less than the above-described upper limit, the optical properties of the stretched film are likely to be improved.

In one embodiment of the present invention, the content of the nitrogen element-containing compound (β) in the stretched film is preferably 0.01 parts by mass or more, more preferably 0.05 parts by mass or more, still more preferably 0.07 parts by mass or more, particularly preferably 0.1 parts by mass or more, but preferably 20 parts by mass or less, more preferably 15 parts by mass or less, still more preferably 10 parts by mass or less, yet still more preferably 5 parts by mass or less, particularly preferably 1 part by mass or less, with respect to 100 parts by mass of the PVA resin (α). When the content of the compound (β) is equal to or more than the above-described lower limit, the optical properties of the stretched film are likely to be improved, while when the content of the compound (β) is equal to or less than the above-described upper limit, a film can be easily produced with good productivity while reducing the production cost of the film. It is noted here that the content of the compound (β) based on the mass of the stretched film may also be selected from the above-described range.

The stretched film of the present invention may further contain at least one selected from the group consisting of the above-described plasticizer, surfactant, and additives. The content of each of the plasticizer, surfactant, and additives can be selected from the content ranges described above in the section of <PVA Film>.

The stretched film of the present invention may be a monolayer film or a multilayer film, as long as it satisfies Equation (II). Films constituting the multilayer film may be the same or different from each other in terms of composition and thickness. In the multilayer film, the interfaces between films may be completely or partially invisible. In other words, the interfaces between films may disappear during the production, giving a monolayer film appearance. When the stretched film of the present invention is a multilayer film, the PVA resin (α) and the compound (β) are each contained in at least one of the films constituting the multilayer film such that the multilayer film itself satisfies Equation (II), and it is preferred that the PVA resin (α) be contained in all of the films.

Examples of a method of adjusting the signal intensity ratio to be in the range of Equation (II) include the same methods as those exemplified above as the method of adjusting the signal intensity ratio to be in the range of Equation (I). When the stretched film is a multilayer film, the layer configuration thereof may be, for example, the same as the above-described layer configuration of the PVA film that is a multilayer film. Further, when the stretched film of the present invention has the same layer configuration as the above-described PVA film A, in the same manner as in the PVA film A, from the standpoint of the ease of improving the moist heat resistance and the water resistance, the PVA resin (α3) is preferably the same as at least one selected from the group consisting of the PVA resin (α1) and the PVA resin (α2), more preferably the same as both of the PVA resin (α1) and the PVA resin (α2).

When the stretched film of the present invention has the same layer configuration as the above-described PVA film B, from the standpoint of the ease of improving the moist heat resistance and the water resistance, the relationship between the PVA resins (α3) and (α4) and the PVA resins (α1), (α2), and (α5) is preferably the same as that in the PVA film B.

The thickness of the stretched film can be selected as appropriate in accordance with the intended use, and it is preferably 0.1 μm or more, more preferably 1 μm or more, still more preferably 5 μm or more, yet still more preferably 10 μm or more, particularly preferably 20 μm or more, particularly more preferably 25 μm or more, but preferably 200 μm or less, more preferably 100 μm or less, still more preferably 50 μm or less. When the thickness of the stretched film is equal to or more than the above-described lower limit, the moist heat resistance and the water resistance are likely to be improved, while when the thickness of the stretched film is equal to or less than the above-described upper limit, it is advantageous from the standpoint of optical properties and reduction in film thickness. When the stretched film is a multilayer film, the thickness of the stretched film means the thickness of the multilayer film itself (i.e., a total thickness of films constituting the multilayer film). The thickness of the stretched film can be measured using a film thickness meter by, for example, the method described below in the section of Examples.

As described above, the stretched film of the present invention has excellent water resistance, and can inhibit the release of the compound (β) in water or an aqueous solution. Therefore, when the stretched film is immersed in 50°C pure water for 15 minutes and then taken out, the absorbance Y of this pure water is low. The absorbance Y of the stretched film can be selected from the numerical ranges of the absorbance Y described above in the section of <PVA Film>.

As described above, the stretched film of the present invention has excellent moist heat resistance. Therefore, when the compound (β) functions as a dye or a pigment, a change in dichroic ratio before and after a moist heat resistance test can be inhibited. In other words, in the stretched film of the present invention, deterioration of the polarization performance can be inhibited even if the stretched film is left under a high-temperature and high-humidity condition for an extended period. The Δ dichroic ratio of the stretched film can be selected from the numerical ranges of the Δ dichroic ratio

described above in the section of <PVA Film>.

In one preferred embodiment of the present invention, the stretched film of the present invention that satisfies Equation (II) is preferably obtained by stretching the PVA film of the present invention that satisfies Equation (I).

[Method of Producing Stretched Film]

A method of producing the stretched film of the present invention is not particularly limited and may be, for example, a method of stretching a PVA film containing a PVA resin ($\alpha$) and a compound ($\beta$) such that Equation (II) is satisfied. As long as the stretched film satisfies Equation (II) after being stretched, the type of the PVA film used as a raw material is not particularly limited, and a PVA film satisfying Equation (I) or a PVA film not satisfying Equation (I) may be used. From the standpoint of the ease of adjusting the signal intensity ratio to be in the range of Equation (II), it is preferred to use the PVA film of the present invention that satisfies Equation (I).

The stretching may be uniaxial stretching or multiaxial stretching such as biaxial stretching; however, uniaxial stretching is preferred, and it may be performed by either a wet stretching method or a dry stretching method. The wet stretching method may be performed in an aqueous solution containing boric acid. The dry stretching method may be performed in the air using a PVA film that has absorbed water. Among these methods, from the standpoint of the ease of adjusting the signal intensity ratio to be in the range of Equation (II), the wet stretching method is preferred, and uniaxial stretching in an aqueous solution containing boric acid is more preferred. The concentration of boric acid in the aqueous boric acid solution is preferably 0.5 to 6% by mass, more preferably 1 to 5% by mass, still more preferably 1.5 to 4% by mass. The aqueous boric acid solution may also contain potassium iodide.

The stretching temperature is preferably 30 to 90°C, more preferably 40 to 80°C, still more preferably 50 to 70°C. The draw ratio is preferably 3 or more, more preferably 4 or more, still more preferably 5 or more. When the draw ratio is equal to or more than the above-described lower limit, the optical properties (e.g., polarization performance and luminous efficiency) are likely to be improved. An upper limit of the draw ratio is not particularly limited; however, it is preferably 10 or less, more preferably 8 or less.

Drying is preferably performed after the stretching. The drying temperature is preferably 30 to 150°C, more preferably 50 to 130°C. The drying time is preferably 30 seconds to 24 hours, more preferably 1 minute to 1 hour.

[Use]

The PVA film and the stretched film according to the present invention can be utilized as polarizing films, photon up-conversion films, photochromic films, and the like. Thereamong, the PVA film and the stretched film according to the present invention can each be preferably utilized as a polarizing film or a photon up-conversion film.

EXAMPLES

The present invention will now be described more concretely by way of Examples; however, the present invention is not limited by the below-described Examples at any rate.

The evaluation methods employed in Examples and Comparative Examples are described below.

<Saponification Degree and Viscosity-Average Polymerization Degree of PVA Resin ($\alpha$)>

The saponification degree and the viscosity-average polymerization degree of a PVA resin ($\alpha$) were each measured in accordance with JIS K6726 (1994).

<Measurement of Thickness of PVA Films 1 and 2, PVA Film, and Stretched Film>

For the PVA film 1, the PVA film 2, the PVA film, and the stretched film that were obtained in each of Examples and Comparative Examples, the thickness of a widthwise central portion of each film was measured using a film thickness meter ("DG-5100", manufactured by Ono Sokki Co., Ltd.).

<TOF-SIMS Measurement of PVA Film 1 and PVA Film>

For the PVA film 1 obtained in each Comparative Example and the PVA film obtained in each Example, the intensity value of TOF-SIMS $C_2H_3O_2^-$ signal derived from a PVA resin ($\alpha$) and the intensity value of TOF-SIMS $CN^-$ signal derived from a nitrogen element-containing compound ($\beta$) were measured over the entire thickness direction of each film using a time-of-flight secondary ion mass spectrometer (TOF-SIMS). Specifically, first, the surface layer of each film was irradiated with sputtering ions, and sputtering and measurement were alternately repeated to perform a composition

analysis in the entire thickness direction of each film. Then, from the intensity values of the TOF-SIMS $C_2H_3O_2^-$ or $CN^-$ signal derived from the PVA resin (α) or the nitrogen element-containing compound (β) that were measured over the entire thickness direction of each film, when the thickness of each film was defined as X (μm), those intensity values of the TOF-SIMS signals at 20 points equally spaced in the thickness direction in a range of 0.3X (μm) from the center of the film in the thickness direction toward each surface (outside), i.e., in a total range of 0.6X, were extracted. For example, as in Example 1 described below, when the thickness of the PVA film was 61 (μm), the intensity values of the TOF-SIMS $C_2H_3O_2^-$ or $CN^-$ signal derived from the PVA resin (α) or the nitrogen element-containing compound (β) at 20 points existing at 1.83-μm intervals in the thickness direction (actually, for the sake of measurement accuracy, 20 points existing at 1.8-μm intervals in the thickness direction) in a range of 18.3 (μm) from the center of the film in the thickness direction to each outer surface, which is a total range of 36.6 (μm), were extracted. Among the 20 points where the intensity values of the TOF-SIMS signals were extracted, those points where the intensity value of the $CN^-$ signal derived from the nitrogen element-containing compound (β) was maximum and minimum were defined as $P_{MAX}$ and $P_{min}$, respectively. Further, the intensity value of the TOF-SIMS $CN^-$ signal derived from the nitrogen element-containing compound (β) at $P_{min}$, the intensity value of the TOF-SIMS $C_2H_3O_2^-$ signal derived from the PVA resin (α) at $P_{min}$, the intensity value of the TOF-SIMS $CN^-$ signal derived from the nitrogen element-containing compound (β) at $P_{MAX}$, and the intensity value of the TOF-SIMS $C_2H_3O_2^-$ signal derived from the PVA resin (α) at $P_{MAX}$ were defined as A, B, C, and D, respectively. These intensity values A, B, C, and D as well as their ratio ((C/D)/(A/B)) were determined. The measurement conditions of TOF-SIMS were as follows.

(Measurement Conditions of TOF-SIMS)

High-resolution mode
Device name: "TOF-SIMS5", manufactured by IONTOF GmbH
Primary ion source: $Bi_3^{++}$ Bu mode, 0.2 pA at 25 keV (10 kHz)
Sputtering ion source: $Ar_{1600}^+$, 7 nA at 20 KeV (100 μsec)
Charge correction: Electron Flooding On
Measurement range: 500 × 500 μm sputtering, 200 × 200 μm analysis
1 cycle: 2 flames analysis/7 flames sputtering

<TOF-SIMS Measurement of Stretched Film>

For the stretched film obtained in each of Examples and Comparative Examples, the intensity value of TOF-SIMS $C_2H_3O_2^-$ signal derived from a PVA resin (α) and the intensity value of TOF-SIMS $CN^-$ signal derived from a nitrogen element-containing compound (β) were measured over the entire thickness direction of each film using a time-of-flight secondary ion mass spectrometer (TOF-SIMS). Specifically, first, the surface layer of each film was irradiated with sputtering ions, and sputtering and measurement were alternately repeated to perform a composition analysis in the entire thickness direction of each film. Then, from the intensity values of the TOF-SIMS $C_2H_3O_2^-$ or $CN^-$ signal derived from the PVA resin (α) or the nitrogen element-containing compound (β) that were measured over the entire thickness direction of each film, when the thickness of each film was defined as Y (μm), those intensity values of the TOF-SIMS signals at 20 points equally spaced in the thickness direction in a range of 0.3Y (μm) from the center of the film in the thickness direction toward each surface (outside), i.e., in a total range of 0.6Y, were extracted. For example, as in Example 1 described below, when the thickness of the stretched film was 34 μm, the intensity values of the TOF-SIMS $C_2H_3O_2^-$ or $CN^-$ signal derived from the PVA resin (α) or the nitrogen element-containing compound (β) at 20 points existing at 1.02-μm intervals in the thickness direction (actually, for the sake of measurement accuracy, 20 points existing at 1.0-μm intervals in the thickness direction) in a range of 10.2 (μm) from the center of the film in the thickness direction to each outer surface, i.e., a total range of 20.4 (μm), were extracted. Among the 20 points where the intensity values of the TOF-SIMS signals were extracted, those points where the intensity value of the TOF-SIMS $CN^-$ signal derived from the nitrogen element-containing compound (β) was maximum and minimum were defined as $P_{MAX}$ and $P_{min}$, respectively. Further, the intensity value of the TOF-SIMS $CN^-$ signal derived from the nitrogen element-containing compound (β) at $P_{min}$, the intensity value of the TOF-SIMS $C_2H_3O_2^-$ signal derived from the PVA resin (α) at $P_{min}$, the intensity value of the TOF-SIMS $CN^-$ signal derived from the nitrogen element-containing compound (β) at $P_{MAX}$, and the intensity value of the TOF-SIMS $C_2H_3O_2^-$ signal derived from the PVA resin (α) at $P_{MAX}$ were defined as E, F, G, and H, respectively. These intensity values E, F, G, and H as well as their ratio ((G/H)/(E/F)) were determined. The measurement conditions of TOF-SIMS were as follows.

(Measurement Conditions of TOF-SIMS)

High-resolution mode
Device name: "TOF-SIMS5", manufactured by IONTOF GmbH
Primary ion source: $Bi_3^{++}$ Bu mode, 0.2 pA at 25 keV (10 kHz)
Sputtering ion source: $Ar_{1600}^{+}$, 7 nA at 20 KeV (100 μsec)
Charge correction: Electron Flooding On
Measurement range: 500 × 500 μm sputtering, 200 × 200 μm analysis
1 cycle: 2 flames analysis/7 flames sputtering

<Absorbance X of Pure Water After Immersion of PVA Film>

A sample of 3 cm in width × 5 cm in length was cut out from a central portion of the PVA film 1 obtained in each Comparative Example or a central portion of the PVA film obtained in each Example. This sample was immersed in 40 mL of 30°C pure water for 5 minutes and then taken out. Subsequently, the absorbance of the pure water after the immersion of the film therein was measured using a spectrophotometer equipped with an integrating sphere ("U4100", manufactured by Hitachi, Ltd.), and the maximum value of the absorbance in the visible light wavelength region (380 to 750 nm) was determined as absorbance X. Since the wavelength (maximum absorption wavelength) at the absorbance X in Example 1 was 650 nm, the absorbance at 650 nm was also taken as the absorbance X in Example 2 and Comparative Examples 1 and 2.

<Absorbance Y of Pure Water After Immersion of Stretched Film>

A sample of 2 cm in width × 2 cm in length was cut out from a central portion of the stretched film obtained in each Example or Comparative Example. This sample was immersed in 20 mL of 50°C pure water for 15 minutes and then taken out. Subsequently, the absorbance of the pure water after the immersion of the film therein was measured using a spectrophotometer equipped with an integrating sphere ("U4100", manufactured by Hitachi, Ltd.), and the maximum value of the absorbance in the visible light wavelength region (380 to 750 nm) was determined as absorbance Y. Since the wavelength (maximum absorption wavelength) at the absorbance Y in Example 1 was 650 nm, the absorbance at 650 nm was also taken as the absorbance Y in Example 2 and Comparative Examples 1 and 2.

<Δ Dichroic Ratio of Stretched Film>

A sample of 1.5 cm in width × 3 cm in length was cut out from a central portion of the stretched film obtained in each Example or Comparative Example. Then, using a spectrophotometer equipped with an integrating sphere ("V7100", manufactured by JASCO Corporation), the single transmittance Ts (%) and the polarization degree P(%) of the sample before a moist heat resistance test were determined with the measurement wavelength being set to the maximum absorption wavelength (650 nm) in the above-described measurement of the absorbance Y. The following equation was used to determine the dichroic ratio Rd at the maximum absorption wavelength (650 nm) before a moist heat resistance test, and the thus obtained value was defined as Rd1. Subsequently, the sample was immobilized on a metal frame and left to stand for 500 hours in a 60°C/90% RH atmosphere of to perform a moist heat resistance test. Similarly, using a spectrophotometer equipped with an integrating sphere ("V7100", manufactured by JASCO Corporation), the single transmittance Ts (%) and the polarization degree P(%) of the sample after the moist heat resistance test were determined with the measurement wavelength being set to the maximum absorption wavelength (650 nm). Further, the following equation was used to determine the dichroic ratio Rd at the maximum absorption wavelength (650 nm) after the moist heat resistance test, and the thus obtained value was defined as Rd2. A value obtained by subtracting Rd1 from Rd2 was calculated as Δ dichroic ratio.

$$Rd = \log(Ts/100 - Ts/100 \times P/100)/\log(Ts/100 + Ts/100 \times P/100)$$

[Example 1]

(PVA Film 1)

As a PVA resin (α1) constituting a PVA film 1, an ethylene-vinyl alcohol copolymer (a saponification product of an ethylene-vinyl acetate copolymer, polymerization degree: 2,400, saponification degree: 99.3% by mole, ethylene modification amount: 2.5% by mole) was used. First, a film-forming stock solution having a volatile content of 66% by mass, which contained 100 parts by mass of the PVA resin (α1), 10 parts by mass of glycerin as a plasticizer, 0.1 parts by

mass of sodium polyoxyethylene lauryl ether sulfate as a surfactant, and water as a liquid medium, was prepared. This film-forming stock solution was discharged in the form of a film from a T-shaped slit die onto a first drying roll (surface temperature: 88°C, peripheral speed: 20.0 m/min) and, while uniformly blowing hot air (temperature: 90°C, dew point: 10°C) to the entire non-contact surface of the first drying roll at an air velocity of 5 m/sec, the film-forming stock solution was dried on the first drying roll until the resulting resin film had a volatile content of 25% by mass. Subsequently, the resin film was peeled off from the first drying roll and, in a film-forming apparatus equipped with 18 drying rolls whose rotation axes were parallel to each other, the resin film was dried with a second and subsequent drying rolls (surface temperature: 84°C, peripheral speed: 20.5 m/min) in such a manner that the first drying roll contact surface and the first drying roll non-contact surface of the resin film alternately faced the respective drying rolls. Then, both widthwise ends (edges) of the thus obtained film were cut and removed, after which the film was wound into a roll to continuously produce an elongated PVA film 1 of 30 μm in thickness.

(PVA Film 2)

An elongated PVA film 2 of 30 μm in thickness was continuously produced in the same manner as in the production of the PVA film 1. As shown in Table 1, a PVA resin (α2) was used as the PVA resin constituting the PVA film 2.

(PVA Aqueous Solution)

A PVA aqueous solution, which contained 100 parts by mass of an ethylene-vinyl alcohol copolymer (a saponification product of an ethylene-vinyl acetate copolymer, polymerization degree: 2,400, saponification degree: 99.3% by mole, ethylene modification amount: 2.5% by mole) as a PVA resin (α3) and 60 parts by mass of DIRECT BLUE 15 as a nitrogen-containing compound (β), and in which the content of the PVA resin (α3) was 8% by mass, was produced.

(Production of PVA Film)

Samples of 10 cm in width and 15 cm in length were each cut out from a widthwise central portion of the above-produced PVA film 1 and that of the above-produced PVA film 2. These two cut samples were laminated together using a laminator ("LAMIMAN IKO-650E", manufactured by YOUBON Co., Ltd.) while dropping the above-produced PVA aqueous solution between the two cut samples. The lamination temperature in this lamination was 25°C. The resulting laminated film was dried in a 60°C dryer for 10 minutes with both ends of the laminated film being immobilized so as to prevent a dimensional change in the length direction, whereby a PVA film was obtained. The thus obtained PVA film had the PVA film 1, a PVA resin layer, and the PVA film 2 in the order mentioned.

(Stretched Film)

A sample of 5 cm in width and 8 cm in length was cut out from a widthwise and lengthwise central portion of the above-produced PVA film in such a manner to allow uniaxial stretching of an area of 5 cm in width and 5 cm in length. This sample was uniaxially stretched in the length direction to 5 times its original length while being immersed in a 40°C aqueous boric acid solution containing 3.0% by mass of boric acid (stretching treatment). Subsequently, the sample was dried in a 60°C dryer for 5 minutes with both ends of the sample being immobilized so as to prevent a dimensional change in the length direction, whereby a stretched film was obtained.

[Example 2]

(PVA Films 1 and 2, PVA aqueous solution, PVA film, and Stretched Film)

A PVA film 1, a PVA film 2, a PVA aqueous solution, a PVA film, and a stretched film were produced in the same manner as in Example 1, except that the content of DIRECT BLUE 15 in the PVA aqueous solution was changed to 12 parts by mass.

[Comparative Example 1]

(PVA Film 1)

A PVA film 1 was produced in the same manner as in Example 1, except that the thickness of the PVA film 1 was changed to 60 μm.

(Stretched Film)

A sample of 5 cm in width and 9 cm in length was cut out from a widthwise central portion of the above-produced PVA film 1 in such a manner to allow uniaxial stretching of an area of 5 cm in width and 5 cm in length. This sample was uniaxially stretched (first stretching) in the length direction to 1.3 times its original length while being immersed in 48°C water for 2 minutes, and allowed to swell (swelling treatment). Next, during a period of 5 minutes in which the sample was immersed in a 48°C DIRECT BLUE 15 solution (dyeing bath) containing 0.013% by mass of DIRECT BLUE 15, 0.42% by mass of sodium sulfate, and 0.42% by mass of sodium tripolyphosphate, the sample was dyed (dyeing treatment) while being uniaxially stretched (second stretching) in the length direction by a factor of 1.8 (a total factor of 2.4). Then, during a period of 1 minute in which the sample was immersed in a 40°C aqueous boric acid solution (crosslinking bath) containing 2.0% by mass of boric acid, the sample was crosslinked (crosslinking treatment) while being uniaxially stretched (third stretching) in the length direction by a factor of 1.1 (a total factor of 2.7). Subsequently, during a period in which the sample was immersed in a 58°C aqueous boric acid solution (stretching bath) containing 3.9% by mass of boric acid, the sample was uniaxially stretched (fourth stretching) in the length direction by a factor of 1.9 (a total factor of 5.0) (stretching treatment). Thereafter, the sample was immersed in a 30°C aqueous boric acid solution (washing bath) containing 1.5% by mass of boric acid for 1 second without stretching, and thereby washed (washing treatment). Then, the sample was dried in a 70°C dryer for 3 minutes with both ends of the sample being immobilized so as to prevent a dimensional change in the length direction (drying treatment), whereby a stretched film was obtained.

[Comparative Example 2]

(PVA Film 1)

As a PVA resin (α1) constituting a PVA film 1, an ethylene-vinyl alcohol copolymer (a saponification product of an ethylene-vinyl acetate copolymer, polymerization degree: 2,400, saponification degree: 99.3% by mole, ethylene modification amount: 2.5% by mole) was used. First, an aqueous solution, which contained 100 parts by mass of the PVA resin (α1), 10 parts by mass of glycerin as a plasticizer, 0.1 parts by mass of sodium polyoxyethylene lauryl ether sulfate as a surfactant, and 0.75 parts by mass of DIRECT BLUE 15 as a pigment, and had a PVA content of 10% by mass, was prepared as a film-forming stock solution. This film-forming stock solution was dried on a 60°C metal roll, and the obtained film was heat-treated in a hot air dryer at a temperature of 124°C for 10 minutes to produce an elongated PVA film 1 having a thickness of 60 μm.

(Stretched Film)

Using the thus produced PVA film 1, a stretched film was produced in the same manner as in Example 1.

With regard to the PVA films 1, PVA films 2, PVA aqueous solutions, PVA films, and stretched films that were obtained in the respective Examples and Comparative Examples, Table 1 shows the following: the polymerization degree, the saponification degree, and the content of the PVA resin (α); the type and the content of the nitrogen-containing compound (β); and the thickness of each film measured by the above-described method.

For the PVA films and the stretched films that were obtained in Examples 1 and 2 as well as the PVA films 1 and the stretched films that were obtained in Comparative Examples 1 and 2, the following were measured in accordance with the above-described respective methods: thickness; TOF-SIMS; absorbances X and Y of pure water after immersion of each film; and Δ dichroic ratio. The results thereof are shown in Table 2. In Examples 1 and 2 and Comparative Examples 1 and 2, the positions of C and G in Equations (I) and (II) were each within a central 20% range of the film thickness direction, and the positions of A and E in Equations (I) and (II) were each within a central 40 to 60% range of the film thickness direction. Further, the thickness of the PVA resin layer between the PVA films 1 and 2 in Example 1 was 0.75 μm, and the thickness of the PVA resin layer between the PVA films 1 and 2 in Example 2 was also 0.75 μm.

[Table 1]

| | PVA film | | | | | | | | | | | | Stretched film | |
|---|---|---|---|---|---|---|---|---|---|---|---|---|---|---|
| | PVA film 1 | | | PVA film 2 | | | PVA aqueous solution | | | | PVA resin (α) | Nitrogen element-containing compound (β) | PVA resin (α) | Nitrogen element-containing compound (β) |
| | Thickness | PVA resin (α 1) | | Thickness | PVA resin (α 2) | | Nitrogen element-containing compound | | PVA resin (α 3) | | | | | |
| | | Polymerization degree | Saponification degree | | Polymerization degree | Saponification degree | Type | Content※1 | Polymerization degree | Saponification degree | Content※4 | Content※5 | Content※4 | Content※5 |
| | μm | | % by mole | μm | | % by mole | | parts by mass | | % by mole | parts by mass | parts by mass | parts by mass | parts by mass |
| Example 1 | 30 | 2400 | 99.3 | 30 | 2400 | 99.3 | DIRECT BLUE 15 | 60 | 2400 | 99.3 | 90.4 | 0.79 | 99.1 | 0.69 |
| Example 2 | 30 | 2400 | 99.3 | 30 | 2400 | 99.3 | DIRECT BLUE 15 | 12 | 2400 | 99.3 | 90.7 | 0.16 | 99.7 | 0.14 |
| Comparative Example | 60 | 2400 | 99.3 | — | — | — | —※2 | — | — | — | 90.9 | — | 98.8 | 0.6 |
| Comparative Example | 60 | 2400 | 99.3 | — | — | — | —※3 | — | — | — | 90.2 | 0.75 | 99.3 | 0.74 |

1: Content with respect to 100 parts by mass of the PVA resin (α3)
*2: Addition of DIRECT BLUE 15 to the dyeing bath in the production of the stretched film from the PVA film 1
*3: Addition of DIRECT BLUE 15 to the film-forming stock solution for the PVA film 1
*4: Content with respect to the mass of the PVA film or stretched film
*5: Content with respect to 100 parts by mass of the PVA resin (α)

[Table 2]

| | PVA film | | | | | | | Stretched film | | | | | | | |
|---|---|---|---|---|---|---|---|---|---|---|---|---|---|---|---|
| | Thickness | TOF-SIMS measurement | | | | | Absorbance X of pure water after immersion of PVA film (650nm) | Thickness | TOF-SIMS measurement | | | | | Absorbance Y of pure water after immersion of stretched film(650nm) | Δ dichroic ratio |
| | | Intensity of $CN^-$ signal derived from nitrogen element-containing compound (β) | | Intensity of $C_2H_3O_2^-$ signal derived from PVA resin (α) | | Signal intensity ratio | | | Intensity of $CN^-$ signal derived from nitrogen element-containing compound (β) | | Intensity of $C_2H_3O_2^-$ signal derived from PVA resin (α) | | Signal intensity ratio | | |
| | | A ($P_{min}$) | C ($P_{MAX}$) | B ($P_{min}$) | D ($P_{MAX}$) | (C/D) / (A/B) | | | E ($P_{min}$) | G ($P_{MAX}$) | F ($P_{min}$) | H ($P_{MAX}$) | (G/H) / (E/F) | | |
| | μm | | | | | | | μm | | | | | | | |
| Example 1 | 61 | 118 | 11323 | 4936 | 2765 | 171 | 0.002 | 34 | 1 | 11 | 695 | 462 | 17 | 0.001 | 5.1 |
| Example 2 | 61 | 43 | 1643 | 2154 | 1241 | 67 | 0 | 37 | 1 | 7 | 675 | 600 | 8 | 0 | 3.3 |
| Comparative Example 1 | 60 | 53 | 92 | 5259 | 5200 | 2 | 0 ※6 | 43 | 1 | 5 | 1510 | 2609 | 3 | 0.013 | 11.2 |
| Comparative Example 2 | 60 | 499 | 812 | 5229 | 5371 | 2 | 0.012 | 35 | 3 | 8 | 19051 | 16221 | 3 | 0.004 | 10 |

*6: In Comparative Example 1, since the PVA film 1 subjected to the measurement of absorbance did not contain DIRECT BLUE 15 as a pigment, the absorbance X (650 nm) of pure water after the immersion of the PVA film 1 was 0.000.

As shown in Table 2, as compared to the PVA film of Comparative Example 2 which had a signal intensity ratio (C/D)/(A/B) of lower than 5, the PVA films of Examples 1 and 2 which had a signal intensity ratio (C/D)/(A/B) of 5 or higher were found to give a lower absorbance X (650 nm) of pure water after the immersion of each film therein. Therefore, the PVA film of the present invention was confirmed to be excellent in water resistance.

Further, as compared to the PVA films of Comparative Examples 1 and 2 which had a signal intensity ratio (G/H)/(E/F) of 3 or lower, the stretched films of Examples 1 and 2 which had a signal intensity ratio (G/H)/(E/F) of higher than 3 were found to have a smaller Δ dichroic ratio before and after the moist heat resistance test and to give a lower absorbance Y (650 nm) of pure water after the immersion of each film therein. Therefore, the stretched film of the present invention was confirmed to be excellent in both moist heat resistance and water resistance.

DESCRIPTION OF SYMBOLS

1, 3: 20% range from surface of the PVA film in the thickness direction
2: Central 60% range of the PVA film in the thickness direction
4: Among 20 points within a central 60% range in the thickness direction, a point where the intensity value of $CN^-$ signal derived from the compound (β) is maximum ($P_{MAX}$)
5: Intensity value of $C_2H_3O_2^-$ signal derived from the PVA resin (α) at $P_{MAX}$
6: Intensity value of $C_2H_3O_2^-$ signal derived from the PVA resin (α) at $P_{min}$
7: Among 20 points within a central 60% range in the thickness direction, a point where the intensity value of $CN^-$ signal derived from the compound (β) is minimum ($P_{min}$)
8: Intensity value of $C_2H_3O_2^-$ signal derived from the PVA resin (α)
9: Intensity value of $CN^-$ signal derived from the compound (β)
10: 20 points within a central 60% range in the thickness direction with regard to the intensity value of $CN^-$ signal derived from the compound (β)
11: 20 points within a central 60% range in the thickness direction with regard to the intensity value of $C_2H_3O_2^-$ signal derived from the PVA resin (α)
100: PVA film
102: Center of the PVA film in the thickness direction when the thickness of the PVA film is X

## Claims

**1.** A polyvinyl alcohol film, comprising:

a polyvinyl alcohol resin (α); and
a nitrogen element-containing compound (β),
wherein the polyvinyl alcohol film satisfies the following Equation (I):

$$(C/D)/(A/B) \geq 5 \qquad (I)$$

[wherein, when at least 20 points equally spaced in the thickness direction are measured by a TOF-SIMS within a central 60% range of the film in the thickness direction and, in the thus obtained measurement data, points where an intensity value of a $CN^-$ signal derived from the nitrogen element-containing compound (β) is maximum and minimum are defined as $P_{MAX}$ and $P_{min}$, respectively:

A represents an intensity value of the $CN^-$ signal derived from the nitrogen element-containing compound (β) at $P_{min}$;
B represents an intensity value of a $C_2H_3O_2^-$ signal derived from the polyvinyl alcohol resin (α) at $P_{min}$;
C represents an intensity value of the $CN^-$ signal derived from the nitrogen element-containing compound (β) at $P_{MAX}$; and
D represents an intensity value of the $C_2H_3O_2^-$ signal derived from the polyvinyl alcohol resin (α) at $P_{MAX}$].

**2.** The polyvinyl alcohol film according to claim 1, wherein the nitrogen element-containing compound (β) has an aromatic ring.

**3.** The polyvinyl alcohol film according to claim 1 or 2, wherein the nitrogen element-containing compound (β) is a dye or a pigment.

**4.** The polyvinyl alcohol film according to claim 1 or 2, wherein the content of the nitrogen element-containing compound

(β) is 0.01 to 20 parts by mass with respect to 100 parts by mass of the polyvinyl alcohol resin (α).

**5.** The polyvinyl alcohol film according to claim 1 or 2, wherein the content of the polyvinyl alcohol resin (α) is 60 to 99.99% by mass with respect to the mass of the polyvinyl alcohol film.

**6.** The polyvinyl alcohol film according to claim 1 or 2, having a thickness of 1 to 250 μm.

**7.** A method of producing the polyvinyl alcohol film according to claim 1 or 2, the method comprising the step of laminating a polyvinyl alcohol film 1 that contains a polyvinyl alcohol resin (α1) and a polyvinyl alcohol film 2 that contains a polyvinyl alcohol resin (α2) via an aqueous polyvinyl alcohol resin solution that contains a polyvinyl alcohol resin (α3) and a nitrogen element-containing compound (β).

**8.** The method according to claim 7, wherein the polyvinyl alcohol resin (α3) is the same as at least one selected from the group consisting of the polyvinyl alcohol resin (α1) and the polyvinyl alcohol resin (α2).

**9.** A stretched film, comprising:

a polyvinyl alcohol resin (α); and
a nitrogen element-containing compound (β),
wherein the stretched film satisfies the following Equation (II):

$$(G/H)/(E/F) > 3 \qquad (II)$$

[wherein, when at least 20 points equally spaced in the thickness direction are measured by a TOF-SIMS within a central 60% range of the stretched film in the thickness direction and, in the thus obtained measurement data, points where an intensity value of a $CN^-$ signal derived from the nitrogen element-containing compound (β) is maximum and minimum are defined as $P_{MAX}$ and $P_{min}$, respectively:

E represents an intensity value of the $CN^-$ signal derived from the nitrogen element-containing compound (β) at $P_{min}$;
F represents an intensity value of a $C_2H_3O_2^-$ signal derived from the polyvinyl alcohol resin (α) at $P_{min}$;
G represents an intensity value of the $CN^-$ signal derived from the nitrogen element-containing compound (β) at $P_{MAX}$; and
H represents an intensity value of the $C_2H_3O_2^-$ signal derived from the polyvinyl alcohol resin (α) at $P_{MAX}$].

**10.** The stretched film according to claim 9, wherein the nitrogen element-containing compound (β) has an aromatic ring.

**11.** The stretched film according to claim 9 or 10, wherein the nitrogen element-containing compound (β) is a dye or a pigment.

**12.** The stretched film according to claim 9 or 10, wherein the content of the nitrogen element-containing compound (β) is 0.01 to 20 parts by mass with respect to 100 parts by mass of the polyvinyl alcohol resin (α).

**13.** The stretched film according to claim 9 or 10, wherein the content of the polyvinyl alcohol resin (α) is 65 to 99.99% by mass with respect to the mass of the stretched film.

**14.** The stretched film according to claim 9 or 10, having a thickness of 0.1 to 200 μm.

**15.** The stretched film according to claim 9 or 10, obtained by stretching the polyvinyl alcohol film according to claim 1.

**16.** The stretched film according to claim 9 or 10, which is a polarizing film, a photon up-conversion film, or a photochromic film.

[FIG. 1]

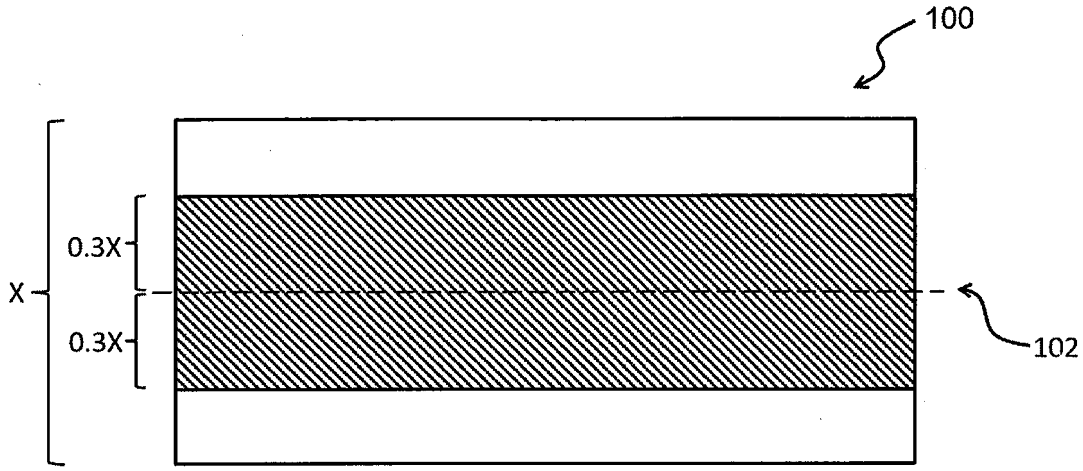
100
X
0.3X
0.3X
102

[FIG. 2]

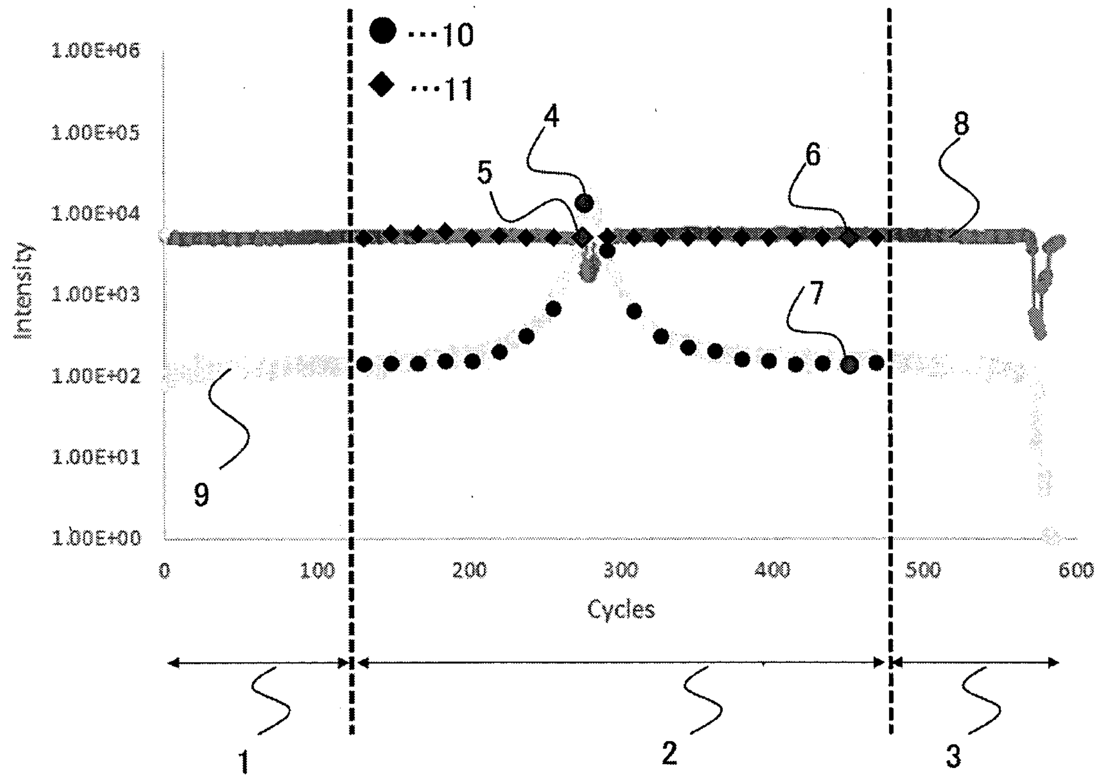
···10
···11
1.00E+06
1.00E+05
1.00E+04
1.00E+03
1.00E+02
1.00E+01
1.00E+00
Intensity
0
100
200
300
400
500
600
Cycles
1
2
3
4
5
6
7
8
9

## INTERNATIONAL SEARCH REPORT

International application No. **PCT/JP2023/037513**

**A. CLASSIFICATION OF SUBJECT MATTER**

***C08J 5/18***(2006.01)i; ***B32B 27/30***(2006.01)i; ***C08L 29/04***(2006.01)i; ***G02B 5/30***(2006.01)i
FI: C08J5/18 CEX; B32B27/30 102; C08L29/04 A; G02B5/30

According to International Patent Classification (IPC) or to both national classification and IPC

**B. FIELDS SEARCHED**

Minimum documentation searched (classification system followed by classification symbols)

C08J5/18; B32B27/30; C08L29/04; G02B5/30; B29C55/02; B29K29/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-091740 A (KURARAY CO LTD) 06 April 2001 (2001-04-06)<br>entire text, in particular, claims, paragraphs [0025], [0030]-[0034] | 1-16 |
| A | JP 2022-120975 A (SUMITOMO CHEMICAL CO) 19 August 2022 (2022-08-19)<br>entire text, in particular, claims, paragraphs [0015]-[0016], [0036], [0120]-[0121] | 1-16 |
| A | JP 2011-053234 A (NIPPON KAYAKU CO LTD) 17 March 2011 (2011-03-17)<br>entire text | 1-16 |
| A | WO 2013/015134 A1 (NIPPON KAYAKU CO LTD) 31 January 2013 (2013-01-31)<br>entire text | 1-16 |
| A | WO 2020/203312 A1 (NITTO DENKO CORPORATION) 08 October 2020 (2020-10-08)<br>entire text | 1-16 |
| A | JP 2006-219637 A (NIPPON SYNTHETIC CHEM IND CO LTD) 24 August 2006 (2006-08-24)<br>entire text | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 December 2023** | **19 December 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
**PCT/JP2023/037513**

**C. DOCUMENTS CONSIDERED TO BE RELEVANT**

| Category* | Citation of document, with indication, where appropriate, of the relevant passages | Relevant to claim No. |
|---|---|---|
| A | WO 2022/145441 A1 (KURARAY CO LTD) 07 July 2022 (2022-07-07) entire text | 1-16 |

Form PCT/ISA/210 (second sheet) (January 2015)

**INTERNATIONAL SEARCH REPORT**
**Information on patent family members**

International application No.
**PCT/JP2023/037513**

| Patent document cited in search report | Publication date (day/month/year) | Patent family member(s) | Publication date (day/month/year) |
|---|---|---|---|
| JP 2001-091740 A | 06 April 2001 | (Family: none) | |
| JP 2022-120975 A | 19 August 2022 | KR 10-2022-0114492 A<br>CN 114910989 A<br>TW 202241704 A | |
| JP 2011-053234 A | 17 March 2011 | WO 2009/088030 A1<br>TW 200937054 A | |
| WO 2013/015134 A1 | 31 January 2013 | CN 103649793 A<br>KR 10-2014-0068805 A<br>TW 201312174 A | |
| WO 2020/203312 A1 | 08 October 2020 | KR 10-2021-0143763 A<br>CN 113646676 A | |
| JP 2006-219637 A | 24 August 2006 | (Family: none) | |
| WO 2022/145441 A1 | 07 July 2022 | TW 202233739 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022166806 A
- JP S5648601 A